# EUROPÄISCHE PATENTANMELDUNG

(11) **EP 4 113 722 A2**
(43) Veröffentlichungstag der Anmeldung: **04.01.2023**
(21) Anmeldenummer: 22179256.7
(22) Anmeldetag: 15.06.2022
(51) Int. Cl.: H01M 50/213, H01M 50/247, H01M 50/284

(54) **AKKUPACK**

(30) Priorität: 30.06.2021 DE 102021206790
(71) Anmelder: Robert Bosch GmbH, 70442 Stuttgart (DE)
(72) Erfinder: Schmehl, Florian, 73760 Ostfildern (DE); Breitenbach, Jan, 70569 Stuttgart (DE); Kneer, Florian, 73105 Duernau (DE); Klee, Christoph, 70599 Stuttgart (DE); Baumgartner, Josef, 72218 Wildberg (DE); Rejman, Marcin, 71334 Waiblingen (DE); Wernerus, Holger, 72124 Pliezhausen (DE)

(57) **Zusammenfassung**

Die Erfindung betrifft einen Akkupack mit einem Gehäuse, mit einem Zellenhalter, mit zumindest einer Akkuzelle, wobei die Akkuzelle zumindest teilweise in dem Zellenhalter aufgenommen ist, mit einem Zellverbinder, wobei der Zellverbinder zur elektrischen Verbindung der Akkuzelle ausgebildet ist, und mit einer Leiterplatte, wobei der Zellverbinder mit der Leiterplatte elektrisch verbunden ist. Es wird vorgeschlagen, dass der Akkupack ein Montageelement zur Unterstützung der Verbindung des Zellverbinders mit der Leiterplatte aufweist, wobei das Montageelement in einer Aussparung der Leiterplatte angeordnet ist.

## Beschreibung

### Stand der Technik

In der DE 10 2014 217 991 A1 ist ein Akkupack für eine Handwerkzeugmaschine mit einem Zellverbinder beschrieben.

### Offenbarung der Erfindung

Die Erfindung betrifft einen Akkupack mit einem Gehäuse, mit einem Zellenhalter, mit zumindest einer Akkuzelle, wobei die Akkuzelle zumindest teilweise in dem Zellenhalter aufgenommen ist, mit einem Zellverbinder, wobei der Zellverbinder zur elektrischen Verbindung der Akkuzelle ausgebildet ist, und mit einer Leiterplatte, wobei der Zellverbinder mit der Leiterplatte elektrisch verbunden ist. Es wird vorgeschlagen, dass der Akkupack ein Montageelement zur Unterstützung der Verbindung des Zellverbinders mit der Leiterplatte aufweist, wobei das Montageelement in einer Aussparung der Leiterplatte angeordnet ist. Vorteilhaft kann dadurch eine sehr gute Anbindung des Zellverbinders an die Leiterplatte realisiert werden.

Der Akkupack ist insbesondere Teil eines Systems, das sich aus dem Akkupack und einem Verbraucher zusammensetzt, wobei der Verbraucher während des Betriebs über den Akkupack mit Energie versorgt wird. Der Akkupack kann beispielsweise als ein Handwerkzeugmaschinenakkupack oder als ein Elektrofahrradakkupack ausgebildet sein. Der Akkupack ist insbesondere als ein Wechselakkupack ausgebildet, der werkzeuglos lösbar mit dem Verbraucher ausgebildet ist. Der Akkupack ist insbesondere verbindbar mit einer Ladevorrichtung zum Aufladen des Akkupacks ausgebildet. Alternativ oder zusätzlich kann der Akkupack auch derart ausgebildet sein, dass er im mit dem Verbraucher verbundenen Zustand aufladbar ist.

Der Verbraucher kann insbesondere als ein Gartengerät, wie beispielsweise ein Rasenmäher oder eine Heckenschere, als ein Haushaltsgerät, wie beispielsweise ein elektrischen Fensterreiniger oder Handstaubsauger, als eine Handwerkzeugmaschine, wie beispielsweise ein Winkelschleifer, ein Schrauber, eine Bohrmaschine, ein Bohrhammer, etc., als ein elektrisches Fortbewegungsmittel, wie beispielsweise ein Elektrofahrrad in Form eines Pedelecs oder eBikes, oder als ein Messwerkzeug, wie beispielsweise ein Laserentfernungsmessgerät, ausgebildet sein. Des Weiteren ist auch denkbar, dass der Verbraucher als ein anderes insbesondere tragbares Gerät ausgebildet ist, wie beispielsweise eine Baustellenbeleuchtung, ein Absauggerät oder ein Baustellenradio.

Das Gehäuse des Akkupacks ist vorzugsweise als ein Außengehäuse ausgebildet. Der Akkupack, insbesondere das Gehäuse des Akkupacks, kann über eine mechanische Schnittstelle lösbar mit dem Verbraucher und/oder einer Ladevorrichtung verbindbar sein. Das Gehäuse des Akkupacks kann ein oder mehrere Gehäuseteile aufweisen. Das Gehäuse weist zumindest ein Gehäuseteil auf, das als ein Außengehäuseteil ausgebildet ist. Das Außengehäuseteil grenzt dabei den Akkupack nach außen ab und kann von einem Benutzer berührt werden. Zudem kann das Gehäuse zumindest ein Innengehäuseteil aufweisen, dass vollständig von dem zumindest einen Gehäuseteil umschlossen wird. Vorzugsweise ist der Zellenhalter als eines der Gehäuseteile ausgebildet, wobei der Zellenhalter als ein Außengehäuseteil oder als ein Innengehäuseteil ausgebildet sein kann. Die Gehäuseteile sind miteinander kraft-, form- und/oder stoffschlüssig verbunden.

Über eine mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Ackupacks mit dem Verbraucher und/oder mit der Ladevorrichtung lösbar ist. Das Betätigungselement kann beispielsweise als ein Knopf, ein Hebel oder als ein Taster ausgebildet sein. Zudem weist der Akkupack zumindest eine elektrische Schnittstelle auf, über die der Akkupack mit dem Verbraucher und/oder mit der Ladevorrichtung elektrisch verbindbar ist. Über die elektrische Verbindung kann der Akkupack beispielsweise geladen und/oder entladen werden. Alternativ oder zusätzlich ist auch denkbar, dass über die elektrische Schnittstelle Informationen von dem Akkupack an den Verbraucher und umgekehrt übermittelbar sind. Die elektrische Schnittstelle ist bevorzugt als eine Kontaktschnittstelle ausgebildet, bei der die elektrische Verbindung über einen physischen Kontakt zumindest zweier leitfähiger Bauteile erfolgt. Die elektrische Schnittstelle umfasst bevorzugt zumindest zwei elektrische Kontaktelemente. Insbesondere ist einer der elektrischen Kontaktelemente als ein Plus-Kontakt und das andere elektrische Kontaktelement als ein Minus-Kontakt ausgebildet. Zusätzlich kann die elektrische Schnittstelle zumindest einen Zusatzkontakt aufweisen, der dazu ausgebildet ist, zusätzliche Informationen an den Verbraucher und/oder an die Ladevorrichtung zu übertragen. Die Zusatzkontakte können als Signalkontakte, Codierkontakte, Temperaturkontakte, etc. ausgebildet sein. Die elektrischen Kontaktelemente können beispielsweise als federnde Kontaktelemente in Form von Kontakttulpen oder als Flachkontakte in Form von Kontaktklingen ausgebildet sein. Alternativ oder zusätzlich kann die elektrische Schnittstelle ein sekundäres Ladespulenelement zur induktiven Ladung aufweisen. Des Weiteren ist in dem Gehäuse des Akkupacks die zumindest eine Akkuzelle angeordnet, die über die elektrische Kontaktvorrichtung mit dem Verbraucher elektrisch verbindbar ist.

Des Weiteren umfasst der Akkupack vorzugsweise eine Elektronik. Die Elektronik kann beispielsweise, eine Recheneinheit, eine Steuereinheit, einen Transistor, einen Kondensator, und/oder die Speichereinheit aufweisen. Zusätzlich oder alternativ ist ebenfalls denkbar, dass Informationen von der Elektronik ermittelt werden. Die Elektronik ist zur Steuerung oder Regelung des Akkupacks und/oder des Verbrauchers ausgebildet. Die Elektronik umfasst insbesondere ein BMS (engl. Battery Management System), das zur Überwachung des Akkupacks ausgebildet ist. Das BMS ist insbesondere dazu ausgebildet, eine Überladung und/oder eine Tiefenentladung des Akkupacks zu verhindern. Vorzugsweise ist das BMS zur korrekten Zellsymmetrierung bzw. Zellbalancierung ausgebildet. Die Elektronik kann zudem ein oder mehrere Sensorelemente aufweisen, beispielsweise einen Temperatursensor zur Ermittlung der Temperatur innerhalb des Ackupacks oder einen Bewegungssensor zur Ermittlung von Bewegungen. Die Elektronik kann alternativ oder zusätzlich ein Kodierungselement, wie beispielsweise ein Kodierungswiderstand, aufweisen. Die elektrischen Kontaktelemente der elektrischen Schnittstelle des Akkupacks können auf der Leiterplatte der Elektronik angeordnet oder mit der Leiterplatte verbunden sein. Die Leiterplatte kann als eine starre Leiterplatte oder als eine flexible Leiterplatte ausgebildet sein. Die Leiterplatte kann ein organisches oder ein anorganisches Substrat aufweisen.

Der Zellenhalter ist vorzugsweise aus einem Kunststoff, insbesondere einem thermoplastischen Kunststoff, ausgebildet. Der Zellenhalter ist vorzugsweise aus einem temperaturbeständigen Kunststoff, bevorzugt aus einem faserverstärkten Kunststoff, ausgebildet. Der Zellenhalter ist vorzugsweise einteilig oder einstückig ausgebildet. Unter einstückig soll im Zusammenhang dieser Anmeldung insbesondere ein Bauteil verstanden werden, dass aus einem Stück ausgebildet und nicht aus mehreren Bauteilen, die stoffschlüssig und/oder kraft- und/oder formschlüssig miteinander verbunden sind, ausgebildet ist. Ein einstückiges Bauteil besteht demnach aus einem einzigen Material. Unter einteilig soll im Zusammenhang dieser Anmeldung mehrere Bauteile, die stoffschlüssig, beispielsweise über ein 2K Spritzguss oder einen Stoffschluss, miteinander verbunden sind, verstanden werden. Eine einteilige Komponente kann somit aus einem oder mehreren Materialien bestehen. Alternativ ist auch denkbar, dass der Zellenhalter mehrteilig ausgebildet ist, wobei die unterschiedlichen Teile kraft- und/oder formschlüssig miteinander verbunden sind.

Der Zellenhalter weist zumindest eine Akkuzellenaufnahme auf, in der eine einzige Akkuzelle aufnehmbar ist. Alternativ ist ebenso denkbar, dass die Akkuzellenaufnahmen derart ausgebildet sind, das zwei oder mehr Akkuzellen in ihnen aufnehmbar sind. Die Akkuzellenaufnahme ist insbesondere derart ausgebildet, dass im mit der Akkuzelle verbundenen Zustand ein Großteil der Außenfläche, insbesondere ein Großteil der Mantelfläche der Akkuzelle, von der Akkuzellenaufnahme umschlossen ist. Insbesondere ist zumindest 60%, vorzugsweise zumindest 75%, bevorzugt zumindest 90%, der Mantelfläche der Akkuzelle an der Akkuzellenaufnahme umschlossen. Vorzugsweise ist die Akkuzellenaufnahme derart ausgebildet, dass die zumindest eine Akkuzelle an einer Innenfläche der Akkuzelle anliegt und durch die Akkuellenaufnahme fixiert ist. Der Zellenhalter weist zwischen zwei Akkuzellenaufnahmen eine Wandung auf, die die Akkuzellenaufnahmen räumlich und elektrisch voneinander isoliert.

Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Akkuzellen als NiCd- oder NiMh-, besonders bevorzugt als lithiumbasierte Akkuzellen bzw. Li-Ion Akkuzellen, ausgebildet. Alternativ ist beispielhaft auch denkbar, dass die Akkuzelle als eine Pouchzelle ausgebildet ist. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10, 8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind.

Die Zellverbinder sind dazu ausgebildet, die zumindest eine Akkuzelle elektrisch mit Leiterplatte zu verbinden. Die Zellverbinder können einstückig, einteilig oder mehrteilig ausgebildet sein. Die Zellverbinder können kraft- und/oder formschlüssig mit dem Gehäuse des Akkupacks, insbesondere dem Zellenhalter, verbunden sein. Es ist ebenso denkbar, dass der Zellverbinder teilweise oder vollständig von dem Gehäuse, insbesondere dem Zellenhalter, umspritzt ist. Der Zellverbinder ist aus einem metallischen Werkstoff ausgebildet. Der Zellverbinder kann beispielsweise aus einem Reinkupfer (Kupfergehalt >95%), einer Kupferlegierung oder einer Nickel-Verbindung ausgebildet sein. Die Akkuzellen sind an ihren Zellpolen jeweils mit einem Zellverbinder verbunden.

Der Zellverbinder weist ein Zellverbindungselement zur elektrischen Verbindung der Akkuzellen und ein Leiterplattenverbindungselement zur elektrischen Verbindung mit der Leiterplatte auf. Das Zellverbindungselement liegt dabei direkt und unmittelbar an der Akkuzelle, insbesondere einem Zellpol der Akkuzelle, an und ist bevorzugt stoffschlüssig mit dem Zellpol verbunden. Der Stoffschluss kann über ein Lötverfahren oder über ein Schweißverfahren, insbesondere über ein Widerstandsschweißverfahren oder über ein Laserschweißverfahren, erfolgen. Die Schweißverbindung unterscheidet sich in diesem Kontext von der Lötverbindung insbesondere dadurch, dass bei der Schweißverbindung ein teilweises Aufschmelzen der zu verbindenden Bauteile erfolgt. Der Stoffschluss kann unter Zuhilfenahme eins Stoffschlussmittels erfolgen. Im Falle eines Lötverfahren ist das Stoffschlussmittel als Lot ausgebildet. Im Falle eines Schweißverfahrens kann das Stoffschlussmittel beispielsweise als ein Metallplättchen ausgebildet sein, dass lokal den Widerstand erhöht. Das Leiterplattenverbindungselement kann direkt mit der Leiterplatte, insbesondere einer Leiterbahn der Leiterplatte, oder indirekt über ein elektrisches Kontaktelement mit der Leiterplatte verbunden sein.

Die Leiterplatte ist vorzugsweise als eine ebene und starre Leiterplatte ausgebildet. Die Leiterplatte weist eine Oberseite und eine Unterseite auf, wobei die Unterseite den Akkuzellen zugewandt ist. Die Aussparung ist derart ausgebildet, das mittels der Aussparung ein Durchgang zwischen der Oberseite und der Unterseite gebildet wird. Die Aussparung kann am Rand der Leiterplatte oder innerhalb der Leiterplatte angeordnet sein. Die Aussparung kann somit eine geschlossene oder eine offene Kante aufweisen.

Das Montageelement ist vorzugsweise einstückig oder einteilig mit dem Gehäuse oder dem Zellenhalter ausgebildet. Das Montageelement kann allerdings auch mit diesen verbunden sein und aus einem anderen Werkstoff, beispielsweise einem Metall bestehen. Die Unterstützung der Verbindung des Zellverbinders mit der Leiterplatte erfolgt während des Montageprozesses oder im verbundenen Zustand.

Des Weiteren wird vorgeschlagen, dass der Akkupack zumindest zwei Akkuzellen aufweist, wobei der Zellverbinder zur elektrischen Verbindung der zumindest zwei Akkuzellen ausgebildet ist. Vorteilhaft können dadurch Akkuzellen durch den Zellverbinder in Reihe- oder parallelgeschaltet werden.

Weiterhin wird vorgeschlagen, dass das Leiterplattenverbindungselement zur Überwachung einer Einzelzellspannung ausgebildet ist. Insbesondere ist das Leiterplattenverbindungselement mit der Elektronik des Akkupack elektrisch verbunden. Vorteilhaft kann dadurch dem BMS die Einzelzellspannung zur Überwachung bereitgestellt werden.

Zudem wird vorgeschlagen, dass das Leiterplattenverbindungselement in der Aussparung der Leiterplatte zwischen der Leiterplatte und dem Montageelement angeordnet ist. Vorteilhaft kann dadurch eine besonders gute elektrische Verbindung realisiert werden.

Des Weiteren wird vorgeschlagen, dass die Leiterplatte eine Leiterplattenebene aufspannt, die sich im Wesentlichen senkrecht zu einer Zellverbinderebene erstreckt, die durch das Zellverbindungselement aufgespannt ist. Vorteilhaft kann durch diese Anordnung ein kompakter Akkupack bereitgestellt werden. Das Leiterplattenverbindungselement erstreckt sich teilweise oder vollständig entlang der Zellverbinderebene. Es ist allerdings auch denkbar, dass sich das Leiterplattenverbindungselement teilweise entlang der Leiterplattenebene erstreckt.

Weiterhin wird vorgeschlagen, dass die Aussparung der Leiterplatte eine Kantenmetallisierung aufweist, wobei das Leiterplattenverbindungselement an der Kantenmetallisierung anliegt. Die Kantenmetallisierung ist einer Verbindungsstelle zugeordnet, an der die elektrische Verbindung des Zellverbinders, insbesondere des Leiterplattenverbindungselements des Zellverbinders, mit der Leiterplatte erfolgt. Die Kantenmetallisierung kann beispielsweise als eine Kupferbeschichtung oder eine Verzinnung der Leiterplatte ausgebildet sein.

Zudem wird vorgeschlagen, dass das Montageelement im Wesentlichen starr ausgebildet ist. Unter starr soll in diesem Zusammenhang verstanden werden, dass das Montageelement im montierten Zustand den Zellverbinder nicht mit einer Kraft beaufschlägt.

Des Weiteren wird vorgeschlagen, dass der Zellverbinder, insbesondere das Leiterplattenverbindungselement des Zellverbinders, stoffschlüssig, vorzugsweise über eine Lötverbindung, mit der Leiterplatte verbunden ist. Vorteilhaft kann dadurch eine gute mechanische und elektrische Verbindung realisiert werden. Alternativ ist auch denkbar, dass die Verbindung über ein Schweißverfahren erfolgt.

Weiterhin wird vorgeschlagen, dass das Montageelemente als ein Federelement ausgebildet ist, das den Zellverbinder mit einer Kraft in Richtung der Leiterplatte beaufschlagt. Vorteilhaft kann dadurch eine optimale mechanische und elektrische Verbindung realisiert werden. Das Federelement kann beispielsweise als eine Kunststofffeder ausgebildet sein. Das Federelement ist insbesondere derart ausgebildet, dass der Zellverbinder in zwei Richtung, vorzugsweise in zumindest zwei entgegengesetzte Richtungen, mit einer Kraft beaufschlagt wird.

Zudem wird vorgeschlagen, dass das Montageelement einstückig mit dem Zellenhalter ausgebildet ist.

Die Erfindung betrifft zudem ein Herstellungsverfahren für einen Akkupack, mit einem Gehäuse, mit einem Zellenhalter, mit zumindest einer Akkuzellen, wobei die die Akkuzelle zumindest teilweise in dem Zellenhalter aufgenommen ist, mit einem Zellverbinder, wobei der Zellverbinder zur elektrischen Verbindung der Ackuzelle ausgebildet ist, und mit einer Leiterplatte, wobei die Leiterplatte eine Aussparung aufweist, und mit einem Montageelement zur Unterstützung der Verbindung des Zellverbinders mit der Leiterplatte. Es wird vorgeschlagen, dass die Verbindung zwischen dem Zellverbinder und der Leiterplatte über ein Aufpressen der Leiterplatte erfolgt, bei der der Zellverbinder mit dem Montageelement in der Aussparung aufgenommen und verformt wird. Vorteilhaft kann dadurch ein günstiges und prozesssicheres Montageverfahren für einen Akkupack bereitgestellt werden.

Des Weiteren wird vorgeschlagen, dass die Aussparung der Leiterplatte eine Kantenmetallisierung aufweist, wobei der Zellverbinder durch das Montageelement mit einer Kraft in Richtung der Kantenmetallisierung beaufschlagt wird.

Die Erfindung betrifft ferner insbesondere einen Akkupack mit einem Gehäuse, mit zumindest zwei Akkuzellen, wobei die Akkuzellen in dem Gehäuse aufgenommen sind, mit einem Zellverbinder, wobei der Zellverbinder zur elektrischen Verbindung der Akkuzellen ausgebildet ist, und mit einer Leiterplatte, wobei der Zellverbinder mit der Leiterplatte elektrisch verbunden ist. Es wird vorgeschlagen, dass die Leiterplatte eine Verbindungsstelle zur stoffschlüssigen Verbindung des Zellverbinders mit der Leiterplatte aufweist, wobei die Verbindungsstelle auf einer den Akkuzellen abgewandten Seite der Leiterplatte angeordnet ist. Vorteilhaft kann dadurch eine gute Anbindung des Zellverbinders an der Leiterplatte realisiert werden.

Die Verbindungsstelle kann für ein Schweißverfahren und/oder für ein Lötverfahren vorgesehen sein. Die Verbindungsschnittstelle ist vorzugsweise mit einer Leiterbahn der Leiterplatte verbunden. Die Verbindungsschnittstelle kann ein Stoffschlussmittel, wie beispielsweise ein Lötpad, aufweisen. Alternativ ist auch denkbar, dass die Verbindungsstelle eine Steckverbindung aufweist, die zur Verbindung eines Steckers oder eines Kabels vorgesehen ist. Weiterhin ist denkbar, dass die Verbindungsstelle als eine Anschweißstelle ausgebildet ist.

Zudem wird vorgeschlagen, dass das Leiterplattenverbindungselement des Zellverbinders eine Biegehilfe zur Unterstützung eines Biegevorgangs während eines Montagevorgangs aufweist. Die Biegehilfe kann beispielsweise als eine Einkerbung, eine Einschnürung oder eine Verjüngung im Material des Leiterplattenverbindungselements ausgebildet sein. Alternativ ist auch denkbar, dass die Biegehilfe durch Auswahl des Materials und der Dicke des Leiterplattenverbindungselements bereitgestellt wird. Beispielhaft kann hierfür das Leiterplattenverbindungselement aus einem Reinkupfer oder einer Kupferlegierung mit einer Dicke unterhalb von 0,5 mm, vorzugsweise unterhalb 0,3 mm, bevorzugt unterhalb 0,15 mm, ausgebildet sein. Dadurch wird der Zellverbinder derart weich, dass er unter minimalen Kraftaufwand zur Montage form- bzw. biegbar ist.

Des Weiteren wird vorgeschlagen, dass der Akkupack zumindest ein Zellverbinderführungselement aufweist, das zur Führung des Zellverbinders während des Montageprozesses ausgebildet ist. Vorteilhaft kann dadurch eine sichere Montage realisiert werden. Das Zellverbinderführungselement kann einstückig oder einteilig mit dem Gehäuse oder dem Zellenhalter des Akkupacks ausgebildet sein. Das Zellverbinderführungselement ist insbesondere dazu ausgebildet, denn Zellverbinder bei einem Umbiegen in Richtung der Verbindungsstelle zu führen. Das Zellverbinderführungselement kann beispielsweise als eine Führungsschiene oder eine Führungsnut ausgebildet sein.

Die Erfindung betrifft zudem insbesondere ein Montageverfahren für einen Akkupack mit zumindest zwei Akkuzellen, mit einem Zellverbinder, wobei der Zellverbinder zur elektrischen Verbindung der Akkuzellen ausgebildet ist, und mit einer Leiterplatte, wobei der Zellverbinder mit der Leiterplatte elektrisch verbunden ist.

Es wird vorgeschlagen, dass der Zellverbinder mit der Leiterplatte über ein Heizstempel-Verfahren (engl. Hot-Stamp) stoffschlüssig verbunden wird. Vorteilhaft kann dadurch eine prozesssichere Anbindung des Zellverbinders an der Leiterplatter realisiert werden. Im Heizstempelverfahren wird der Zellverbinder, insbesondere ein Leiterplattenverbindungselement des Zellverbinders, auf der Verbindungsstelle positioniert und mit einem temperierten Stempel mit einer Kraft beaufschlagt, wodurch der Lötvorgang ausgelöst wird. Das Heizstempel-Verfahren erfolgt dabei bevorzugt automatisch oder semi-automatisch mittels einer Heizstempelvorrichtung.

Weiterhin wird vorgeschlagen, dass der Zellverbinder vor dem Heizstempel-Verfahren über das Zellverbinderführungselement mit dem Akkupack kraft- und/oder formschlüssig verbunden wird. Vorteilhaft wird der Montageprozess dadurch weiter verbessert.

Zudem wird vorgeschlagen, dass der Zellverbinder vor dem Heizstempel-Verfahren umgebogen wird. Das Umbiegen erfolgt dabei insbesondere in einem Bereich zwischen 60° und 120°, vorzugsweise in einem Bereich zwischen 80° und 100°, bevorzugt um im Wesentlichen 90°. Der Winkel entspricht dabei im Wesentlichen der Ausrichtung der Leiterplatte und des Zellverbinders vor dem Umbiegen.

Die Erfindung betrifft ferner insbesondere einen Akkupack mit einem Gehäuse, mit zumindest zwei Akkuzellen, wobei die Akkuzellen in dem Gehäuse aufgenommen sind, mit einem Zellverbinder, wobei der Zellverbinder zur elektrischen Verbindung der Akkuzellen ausgebildet ist, und mit einer Leiterplatte, wobei der Zellverbinder ein Zellverbindungselement zur elektrischen Verbindung der Ackuzellen und ein Leiterplattenverbindungselement zur elektrischen Verbindung mit der Leiterplatte aufweist, wobei das Zellverbindungselement mit den Akkuzellen über einen ersten Stoffschluss und mit dem Leiterplattenverbindungselement über einen zweiten Stoffschluss verbunden ist. Es wird vorgeschlagen, dass der erste Stoffschluss und der zweite Stoffschluss über eine erste Verbindungstechnik hergestellt ausgebildet sind. Vorteilhaft kann dadurch die Komplexität des Herstellungsprozesses reduziert und die Geschwindigkeit erhöht werden. Zudem wird dadurch vorteilhaft ein automatisierter Prozess ermöglicht.

Des Weiteren wird vorgeschlagen, dass die erste Verbindungstechnik als ein Schweißverfahren ausgebildet ist. Das Schweißverfahren kann über die gleiche Schweißvorrichtung durchgeführt werden. Das Schweißverfahren kann beispielsweise als ein Laserschweißverfahren oder als eine Widerstandsschweißverfahren ausgebildet sein. Die erste Verbindungstechnik ist dabei unabhängig von der Materialkombination der zu verbindenden Komponenten. Insbesondere weist der erste und der zweite Stoffschluss jeweils zumindest zwei Schweißpunkte auf. Vorteilhaft kann dadurch die Wahrscheinlichkeit für einen fehlerhaften Stoffschluss reduziert werden.

Weiterhin wird vorgeschlagen, dass das Leiterplattenverbindungselement mit der Leiterplatte über einen dritten Stoffschluss verbunden ist, wobei der dritte Stoffschluss über eine zweite Verbindungstechnik erfolgt, die sich von der ersten Verbindungstechnik unterscheidet. Insbesondere ist die die zweite Verbindungstechnik als ein Lötverfahren ausgebildet ist.

Zudem wird vorgeschlagen, dass das Zellverbindungselement einseitig mit dem Leiterplattenverbindungselement und mit den Akkuzellen über den ersten und den zweiten Stoffschluss verbunden ist.

Des Weiteren wird vorgeschlagen, dass das Gehäuse, insbesondere ein Zellenhalter des Gehäuses, ein Positionierungselement und/oder ein Verriegelungselement aufweist, das zur kraft- und/oder formschlüssigen Verbindung mit dem Leiterplattenverbindungselement ausgebildet ist. Vorteilhaft kann dadurch die Montage erleichtert werden.

Die Erfindung betrifft ferner insbesondere ein Montageverfahren für einen Akkupack, wobei ein erstes Montagemodul, aufweisend eine Leiterplatte mit zumindest einem Leiterplattenverbindungselement, in einem ersten Verfahrensschritt auf ein zweites Montagemodul, aufweisend einen Zellenhalter, in welchem zumindest zwei Akkuzellen angeordnet sind, verbunden wird, wobei in einem zweiten Verfahrensschritt ein Zellverbindungselement mit den Akkuzellen über einen ersten Stoffschluss und mit dem Leiterplattenverbindungselement über einen zweiten Stoffschluss verbunden wird, wobei der erste und der zweite Stoffschluss durch dieselbe Verbindungsvorrichtung erfolgt. Das Montagemodul weist unterschiedliche Komponenten auf, die miteinander fest oder beweglich verbunden sind. Die Verbindungsvorrichtung kann als eine Schweißvorrichtung oder eine Lötvorrichtung ausgebildet sein. Die Verbindungsvorrichtung ist vorzugsweise automatisch oder semi-automatisch ausgebildet.

Weiterhin wird vorgeschlagen, dass die Verbindungsvorrichtung und der Akkupack zwischen dem ersten Stoffschluss und dem zweiten Stoffschluss nur translatorisch relativ zueinander bewegt werden. Es findet keine rotatorische Relativbewegung der Verbindungsvorrichtung zu dem Akkupack statt. Die translatorische Bewegung kann dabei durch die Verbindungsvorrichtung und/oder einer Haltevorrichtung zur Halterung des Akkupacks bzw. der Montagemodule durchgeführt werden.

Die Erfindung betrifft alternativ insbesondere einen Akkupack mit einem Gehäuse, mit zumindest zwei Akkuzellen, wobei die Akkuzellen in dem Gehäuse aufgenommen sind, mit einem Zellverbinder, wobei der Zellverbinder zur elektrischen Verbindung der Akkuzellen ausgebildet ist, und mit einer Leiterplatte, wobei der Zellverbinder mit der Leiterplatte elektrisch verbunden ist. Es wird vorgeschlagen, dass der Zellverbinder ein Zugentlastungselement und/oder ein Verriegelungselement aufweist. Vorteilhaft kann dadurch ein robuster Akkupack bereitgestellt werden.

Das Zugentlastungselement ist insbesondere zur Entlastung eines Zugs zwischen der Leiterplatte und der Akkuzelle ausgebildet. Das Zugentlastungselement kann in horizontaler und/oder in vertikaler Richtung wirken. Unter horizontal soll in diesem Zusammenhang eine Richtung entlang oder parallel zu einer Längsachse der Akkuzellen verstanden werden. Unter vertikal soll in diesem Zusammenhang eine Richtung senkrecht zu der Längsachse der Akkuzellen verstanden werden.

Des Weiteren wird vorgeschlagen, dass das Zugentlastungselement zwischen dem Leiterplattenverbindungselement und dem Zellverbindungselement angeordnet ist. Das Zugentlastungselement ist vorzugsweise einstückig oder einteilig mit dem Zellverbinder ausgebildet.

Weiterhin wird vorgeschlagen, dass das Zugentlastungselement stufenförmig ausgebildet ist. Die Stufe weist dabei einen Hohlraum auf, der sich in horizontaler oder vertikaler Richtung erstreckt und eine Länge in einem Bereich zwischen 0,5 mm und 2,0 mm aufweist. Insbesondere entspricht die Länge des Hohlraums zumindest 1/100, vorzugsweise zumindest 1/50, einer Länge der Akkuzelle. Der Hohlraum kann beispielsweise zwei gegenüberliegende Wände aufweisen, die sich in horizontaler oder vertikaler Richtung erstrecken und über eine dritte Wand, die sich senkrecht erstreckt, verbunden sind.

Zudem wird vorgeschlagen, dass das Zugentlastungselement derart elastisch verformbar ausgebildet ist, dass eine zerstörungsfreie Relativbewegung der Ackuzellen zu der Leiterplatte, insbesondere in vertikaler Richtung, ermöglicht wird. Das Zugentlastungselement ist insbesondere zum Schutz der Stoffschlüsse des Zellverbinders mit den Akkuzellen und der Leiterplatte ausgebildet, sodass eine Relativbewegung, beispielsweise verursacht durch einen Sturz des Akkupacks auf den Boden, durch eine Verformung des Zellverbinders im Bereich des Zugentlastungselements teilweise oder vollständig aufgenommen wird.

Des Weiteren wird vorgeschlagen, dass der Zellverbinder ein Positionierungselement aufweist, das zur formschlüssigen Verbindung mit dem Gehäuse oder einem Zellenhalter des Akkupacks ausgebildet ist, wobei das Positionierungselement derart ausgebildet ist, dass der Zellverbinder über eine rein translatorische Bewegung lösbar ist. Das Positionierungselement kann einstückig oder einteilig mit dem Gehäuse oder dem Zellenhalter des Akkupacks ausgebildet sein. Das Positionierungselement kann beispielsweise als ein Zapfen oder als eine Stufe ausgebildet sein, die eine laterale Bewegung des Zellverbinders im verbundenen Zustand im Wesentlichen vollständig einschränkt. Zur Vereinfachung der Montage ist dabei ein gewisser Spiel vorgesehen.

Weiterhin wird vorgeschlagen, dass der Zellverbinder ein Rückstellmittel aufweist, welches das Gehäuse oder den Zellenhalter mit einer Kraft beaufschlagt. Das Rückstellmittel kann einstückig mit dem Zellverbinder ausgebildet sein. Der Zellverbinder weist eine zu dem Positionierungselement korrespondierende Ausnehmung oder Anformung aus, wobei das Rückstellmittel in der Ausnehmung oder an der Anformung angeordnet ist. Das Rückstellmittel kann beispielsweise als ein Federarm ausgebildet sein.

Zudem wird vorgeschlagen, dass das Verriegelungselement zur formschlüssigen Verbindung mit dem Gehäuse oder dem Zellenhalter ausgebildet ist, wobei das Verriegelungselement derart ausgebildet ist, dass ein Lösen der Verriegelung nur über eine rotatorische Bewegung oder eine elastische Verformung des Zellverbinders möglich ist. Das Verriegelungselement ist vorzugsweise einstückig mit dem Zellverbinder ausgebildet.

Des Weiteren wird vorgeschlagen, dass das Zellverbindungselement und das Leiterplattenverbindungselement des Zellverbinders stoffschlüssig miteinander verbindbar sind, wobei das Zellverbindungselement und das Verriegelungselement einstückig miteinander ausgebildet sind. Insbesondere ist das Leiterplattenverbindungselement über ein Positionierungselement mit dem Zellenhalter oder dem Gehäuse verbunden und über das Zellverbindungselement zusätzlich verriegelt. Vorteilhaft wird dadurch das Leiterplattenverbindungselement vor der Herstellung des Stoffschlusses fixiert.

Weiterhin wird vorgeschlagen, dass das Leiterplattenverbindungselement eine Schmelzsicherung aufweist, die insbesondere als eine Einschnürung ausgebildet ist. Die Schmelzsicherung ist einstückig mit dem Leiterplattenverbindungselement ausgebildet.

Die Erfindung betrifft alternativ insbesondere einen Akkupack mit einem Gehäuse, mit zumindest zwei Akkuzellen, wobei die Akkuzellen in dem Gehäuse aufgenommen sind, mit einem Zellverbinder, wobei der Zellverbinder zur elektrischen Verbindung der Akkuzellen ausgebildet ist, und mit einer Leiterplatte, wobei der Zellverbinder mit der Leiterplatte elektrisch verbunden ist. Es wird vorgeschlagen, dass die Leiterplatte eine Verbindungsstelle zur stoffschlüssigen Verbindung des Zellverbinders mit der Leiterplatte aufweist, wobei die Verbindungsstelle auf einer den Akkuzellen zugewandten Seite der Leiterplatte angeordnet ist. Vorteilhaft kann dadurch die Verbindungsschnittstelle in einem geschützten Bereich angeordnet werden.

Insbesondere ist die Verbindungsstelle auf einer nicht direkt zugänglichen Seite angeordnet. Die Verbindungsstelle ist insbesondere zwischen der Leiterplatte und dem Zellenhalter angeordnet. Der Zellenhalter ist vorzugsweise derart temperaturbeständig ausgebildet, dass die Herstellung eines Stoffschlusses zwischen der Verbindungsstelle und dem Zellverbinder den Zellenhalter nicht oder nur teilweise aufschmelzt. Zwischen der Leiterplatte und dem Zellenhalter kann alternativ oder zusätzlich ein Wärmeschutzelement angeordnet sein. Das Wärmeschutzelement weist einen höheren Schmelzpunkt als der Zellenhalter auf und ist zum Schutz des Zellenhalters ausgebildet. Das Wärmeschutzelement kann beispielsweise als ein Kaptonband oder als ein Mica-Folie ausgebildet sein, das auf dem Zellenhalter aufgeklebt ist.

Des Weiteren wird vorgeschlagen, dass die Leiterplatte eine erste Aussparung und eine zweite Aussparung aufweist, die benachbart zueinander angeordnet sind, wobei die Verbindungsstelle zwischen der ersten und der zweiten Aussparung angeordnet ist. Die Verbindungsstelle erstreckt sich insbesondere im Wesentlichen senkrecht zu der ersten und der zweiten Aussparung. Die erste und die zweite Aussparung sind bevorzugt derart nah aneinander angeordnet, dass die Verbindungsstelle die Fläche zwischen den Aussparungen im Wesentlichen vollständig ausfüllt.

Weiterhin wird vorgeschlagen, dass die erste Aussparung zur Einbringung von thermischer Energie vorgesehen ist. Vorteilhaft kann dadurch mittels der ersten Aussparung der Stoffschluss unterstützt und/oder bewirkt werden. Die Einbringung von thermischer Energie kann kontaktlos, beispielsweise über eine Bestrahlung mit einer Wärmequelle, insbesondere einem Laser, oder über einen Kontakt, beispielsweise über eine Lötvorrichtung oder eine Schweißvorrichtung erfolgen. Die Lötvorrichtung kann beispielsweise als ein Lötkolben oder eine Heizstempel ausgebildet sein.

Zudem wird vorgeschlagen, dass die zweite Aussparung zur Einbringung eines Stoffschlussmittels vorgesehen ist. Das Stoffschlussmittel kann beispielsweise als ein Lötzinn-Draht ausgebildet sein. Vorteilhaft kann durch die zweite Aussparung der Stoffschluss bewirkt oder unterstützt werden. Alternativ oder zusätzlich ist auch denkbar, dass das Stoffschlussmittel auf der Verbindungsstelle und/oder angrenzend zu der Verbindungsstelle angeordnet ist. Alternativ kann die Leiterplatte auch nur eine Aussparung aufweisen die zur Einbringung von thermischer Energie und/oder zur Einbringung eines Stoffschlussmittels vorgesehen ist.

Des Weiteren wird vorgeschlagen, dass die erste Aussparung größer als die zweite Aussparung ausgebildet ist. Insbesondere weist die erste Aussparung und/oder die zweite Aussparung eine Kantenmetallisierung aufweist. Vorteilhaft wird dadurch eine optimale elektrische Verbindung zwischen dem Zellverbinder und der Leiterplatte bereitgestellt.

Weiterhin wird vorgeschlagen, dass die Verbindungsstelle ein Lötpad, insbesondere ein Kupferpad, aufweist. Vorteilhaft kann dadurch eine optimale Lötverbindung realisiert werden.

Zudem wird vorgeschlagen, dass die Leiterplatte eine Prüfeinheit aufweist, die zur optischen und/oder elektrischen Prüfung des Stoffschlusses des Zellverbinders mit der Leiterplatte ausgebildet ist. Die Prüfeinheit ist insbesondere zur Überwachung oder Prüfung der elektrischen Verbindung zwischen der Leiterplatte und dem Zellverbinder ausgebildet. Die Prüfeinheit weist ein oder mehrere Prüfelemente auf, die vorzugsweise mit der Leiterplatte verbunden und auf dieser angeordnet sind. Das Prüfelement kann beispielsweise als eine Aussparung ausgebildet sein, wobei mittels Sichtprüfung nach dem Stoffschluss ermittelbar ist, ob ein Meniskus im Bereich des Prüfelements in Form der Aussparung vorliegt, wobei der Meniskus auf einen erfolgreichen Stoffschluss rückschließen lässt. Alternativ ist auch denkbar, dass das Prüfelement in Form einer Unterbrechung der Verbindungsstelle und/oder eines mit der Verbindungsstelle verbundenen Stoffschlussmittels ausgebildet ist. Die Unterbrechung ist derart ausgebildet, dass sie durch den Stoffschluss geschlossen wird. Vorteilhaft kann im Anschluss über einen Kurzschlusstest der Stoffschluss elektrisch geprüft werden.

Des Weiteren wird vorgeschlagen, dass die Verbindungsstelle ein Stoffschlussmittel aufweist, das als ein Abstandshalter zwischen der Verbindungsstelle und dem Zellverbinder ausgebildet ist. Der Zellverbinder und die Verbindungsstelle sind mittels des Abstandhalters derart beabstandet, dass eine elektrische Verbindung erst durch den Stoffschluss und das zumindest teilweise Aufschmelzen des Stoffschlussmittels erfolgt.

Weiterhin wird vorgeschlagen, dass die Prüfeinheit ein Testpunkt aufweist, der auf einer der Verbindungsstelle abgewandten Seite der Leiterplatte angeordnet ist. Vorteilhaft kann dadurch auf einer leicht zugänglichen Seite der Leiterplatte die elektrische Verbindung geprüft werden.

Zudem wird vorgeschlagen, dass der Zellverbinder ein Wärmeabflussbegrenzungselement aufweist, das außerhalb der Verbindungsstelle angeordnet ist. Vorteilhaft wird dadurch die Herstellung des Stoffschlusses optimiert. Das Wärmeabflussbegrenzungselement ist insbesondere durch eine geeignete Geometrie des Zellverbinders ausgebildet, beispielsweise eine Materialverjüngung. Das Wärmeabflussbegrenzungselement kann beispielsweise als eine Meanderstruktur ausgebildet sein.

Die Erfindung betrifft alternativ insbesondere ein Herstellungsverfahren für einen Akkupack, wobei ein Zellverbinder mit einer Leiterplatte über einen Stoffschluss verbunden wird, wobei der Akkupack eine Prüfeinheit aufweist. Es wird vorgeschlagen, dass während einer Herstellung des Stoffschlusses mittels der Prüfeinheit die elektrische Verbindung zwischen der Leiterplatte und dem Zellverbinder geprüft wird. Vorteilhaft kann dadurch die Qualität der elektrischen Verbindung unmittelbar geprüft werden.

Die Erfindung betrifft alternativ insbesondere einen Akkupack mit zumindest zwei Akkuzellen, mit einem Zellverbinder für ein Laserschweißverfahren, wobei der Zellverbinder zur elektrischen Verbindung der Akkuzellen ausgebildet ist, wobei der Zellverbinder zumindest zwei Verbindungsflächen aufweist, die teilweise an jeweils einem Zellpol der Akkuzellen anliegen. Es wird vorgeschlagen, dass die Verbindungsflächen konvex ausgebildet sind. Vorteilhaft kann dadurch ein prozesssicherer Stoffschluss zwischen dem Zellverbinder und den Akkuzellen sichergestellt werden.

Die Verbindungsflächen können eine oder mehrere konvexe Bereiche aufweisen.

Die Verbindungsflächen sind bevorzugt als geschlossene Flächen ausgebildet, um eine optimale Wärmeverteilung während des Laserschweißverfahrens sicherzustellen.

Des Weiteren wird vorgeschlagen, dass die Verbindungsflächen derart konvex ausgebildet sind, dass eine Position eines Berührungsbereichs, in welchem die Verbindungsflächen an dem Zellpol anliegen, abhängig von einem axialen Versatz der Akkuzellen zueinander ist. Vorteilhaft kann dadurch stets ein gute Verbindung realisiert werden. Die Verbindungsfläche ist dabei grundsätzlich zur Verbindung mit dem Zellpol geeignet, wobei der Berührungsbereich erst im Montageprozess festgestelt wird.

Weiterhin wird vorgeschlagen, dass die Verbindungsflächen derart konvex ausgebildet sind, dass in einem Bereich des axialen Versatzes zwischen 0 und 0,5 mm eine Größe des Berührungsbereichs im Wesentlichen konstant ausgebildet ist. Vorteilhaft kann dadurch eine gleichbleibende Qualität des Stoffschlusses sichergestellt werden. Unter einer im Wesentlichen konstanten Größe des Berührungsbereichs soll dabei eine Abweichung von vorzugsweise weniger als 10% verstanden werden. Der Berührungsbereich ist als eine Teilfläche der Verbindungsfläche ausgebildet, der sich vollständig innerhalb der Verbindungsfläche befindet.

Zudem wird vorgeschlagen, dass ein Durchmesser der Verbindungsfläche zumindest 30 % eines Durchmessers der Akkuzelle entspricht, wobei ein Durchmesser des Berührungsbereichs zumindest 10 % des Durchmessers der Akkuzelle entspricht. Vorteilhaft kann dadurch die Anbindung weiter verbessert werden.

Des Weiteren wird vorgeschlagen, dass ein Radius der Verbindungsfläche in einem Bereich zwischen 50 mm und 300 mm, insbesondere in einem Bereich zwischen 100 mm und 200 mm, liegt. Vorzgusweise liegt ein Durchmesser der Ackuzellen in einem Bereich zwischen 18 und 23 mm. Vorteilhaft kann dadurch eine gute Anbindung realisiert werden.

Weiterhin wird vorgeschlagen, dass die Verbindungsfläche von einer zylindrischen Wandung umschlossen ist. Die zylindrische Wandung ist einstückig mit der Verbindungsfläche ausgebildet. Insbesondere begrenzt die zylindrische Wandung die Verbindungsfläche seitlich.

Zudem wird vorgeschlagen, dass der Zellverbinder zwei Verbindungsflächen aufweist, die einstückig miteinander über eine Brücke verbunden sind. Vorteilhaft sind die Verbindungsflächen über die Brücke mechanisch miteinander gekoppelt.

Die Erfindung betrifft alternativ insbesodnere ein Herstellungsverfahren für einen Akkupack mit zumindest zwei Akkuzellen, die über einen Zellverbinder elektrisch miteinander verbunden sind, wobei der Zellverbinder je Akkuzelle eine Verbindungsfläche aufweist, die teilweise an einem Zellpol der Akkuzellen anliegt, wobei der Zellverbinder mit den Akkuzellen über ein Laserschweißverfahren stoffschlüssig verbunden wird. Es wird vorgeschlagen, dass die Verbindungsflächen konvex ausgebildet sind. Vorteilhaft kann dadurch ein optimaler Stoffschluss sichergestellt werden.

Des Weiteren wird vorgeschlagen, dass das Laserschweißen unter Einwirkung einer Anpresskraft erfolgt, durch die im Bereich der Verbindungsfläche eine konvexe Geometrie der Verbindungsfläche zumindest teilweise auf die Zellpole der Akkuzellen übertragen wird. Vorteilhaft kann dadurch die Anbindung weiter verbessert werden.

Weiterhin wird vorgeschlagen, dass mittels eines optischen Systems eine Auflageposition des Zellverbinders erfasst wird und das Laserschweißverfahren in Abhängigkeit der Auflageposition erfolgt. Vorteilhaft kann dadurch die Anbindung weiter verbessert werden. Das optische System kann beispielsweise eine Kamera oder einen Laserscanner aufweisen, der mit einer Recheneinheit zur Auswertung und Steuerung verbunden ist.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1a eine schematische Seitenansicht einer Handwerkzeugmaschine mit einem Akkupack;
Fig. 1b eine perspektivische Ansicht eines Akkupacks;
Fig. 1c eine perspektivische Ansicht des Akkupacks ohne Gehäuse;
Fig. 1d eine schematische Seitenansicht vor einer Montage einer Leiterplatte des Akkupacks gemäß Fig. 1c;
Fig. 1e eine schematische Seitenansicht nach der Montage der Leiterplatte des Akkupacks gemäß Fig. 1c;
Fig. 2a eine perspektivische Ansicht einer weiteren Ausführungsform eines Ackupacks;
Fig. 2b eine schematische Seitenansicht vor einer Montage einer Leiterplatte des Akkupacks gemäß Fig. 2a;
Fig. 2c eine schematische Seitenansicht nach der Montage der Leiterplatte des Akkupacks gemäß Fig. 2a;
Fig. 3a eine schematische Seitenansicht vor einer Montage einer Leiterplatte eines weiteren Akkupacks;
Fig. 3b eine schematische Seitenansicht während der Montage der Leiterplatte des weiteren Akkupacks gemäß Fig. 3a;
Fig. 3c eine schematische Seitenansicht nach der Montage der Leiterplatte des weiteren Akkupacks gemäß Fig. 3a;
Fig. 3d eine Seitenansicht eines Zellverbinders des Akkupacks gemäß Fig. 3a;
Fig. 4a eine perspektivische Ansicht einer weiteren Ausführungsform eines Ackupacks ohne Gehäuse;
Fig. 4b eine perspektivische Ansicht eines ersten Montagemoduls des Akkupacks gemäß Fig. 4a;
Fig. 5a eine perspektivische Teilansicht einer weiteren Ausführungsform eines Akkupacks ohne Gehäuse;
Fig. 5b ein erster Querschnitt durch den Akkupack gemäß Fig. 5a;
Fig. 5c ein zweiter Querschnitt durch den Akkupack gemäß Fig. 5a;
Fig. 6 eine perspektivische Teilansicht einer weiteren Ausführungsform eines Akkupacks ohne Gehäuse;
Fig. 7a eine schematische Ansicht während einer Montage einer Leiterplatte einer weiteren Ausführungsform eines Akkupacks;
Fig. 7b eine schematische Abbildung eines Zellverbinders des Akkupacks gemäß Fig. 7a;
Fig. 7c eine Oberansicht einer Leiterplatte des Akkupacks gemäß Fig. 7a;
Fig. 7d eine Unteransicht der Leiterplatte des Akkupacks gemäß Fig. 7a;
Fig. 8a eine Oberansicht einer Leiterplatte einer weiteren Ausführungsform eines Akkupacks;
Fig. 8b eine Unteransicht der Leiterplatte des Akkupacks gemäß Fig. 8a;
Fig. 9a eine Oberansicht einer Leiterplatte einer weiteren Ausführungsform eines Akkupacks;
Fig. 9b eine Unteransicht der Leiterplatte des Akkupacks gemäß Fig. 9a;
Fig. 10 einen Teilquerschnitt einer weiteren Ausführungsform eines Akkupacks im Bereich eines Zellverbindungselements.

### Beschreibung der Ausführungsbeispiele

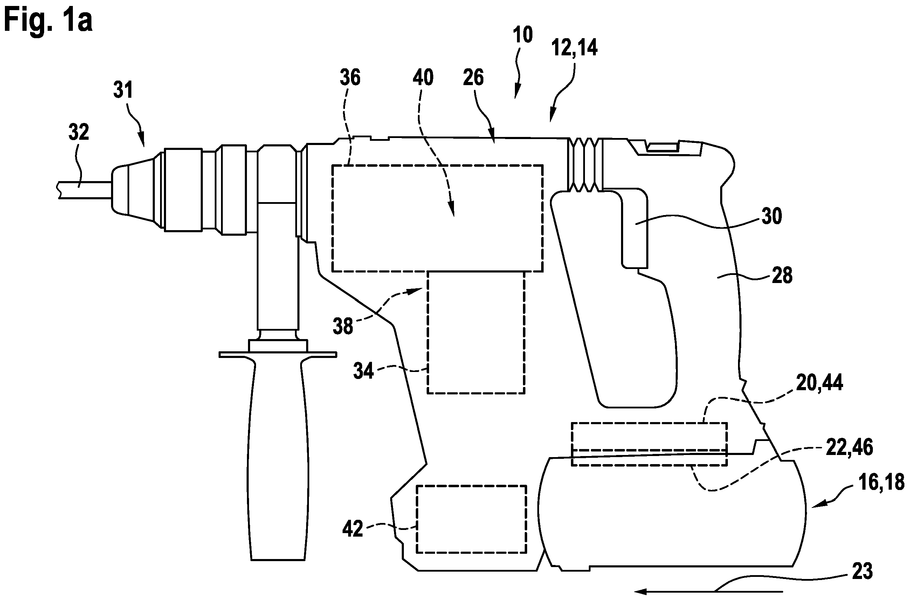

In Fig. 1a ist eine Seitenansicht eines Systems 10 bestehend aus einem als eine Handwerkzeugmaschine 12 ausgebildeten Verbraucher 14 und einem als ein Handwerkzeugmaschinenakkupack 16 ausgebildeten Akkupack 18 gezeigt. Die Handwerkzeugmaschine 12 ist somit als eine Akku-Handwerkzeugmaschine ausgebildet und wird im Betrieb über den Akkupack 18 mit Energie versorgt. Die Handwerkzeugmaschine 12 und der Akkupack 18 weisen jeweils eine mechanische Schnittstelle 20, 22 auf, über die die beiden Komponenten des Systems 10 miteinander lösbar verbunden sind. Der Akkupack 18 ist somit als ein Wechselakkupack ausgebildet und kann durch einen gleichen oder einen ähnlichen Akkupack ausgewechselt werden. Die Handwerkzeugmaschine 12 ist beispielhaft als ein Bohrhammer ausgebildet.

Die Handwerkzeugmaschine 12 weist ein Gehäuse 26 auf, an dessen rückseitigem Ende ein Handgriff 28 mit einem Betriebsschalter 30 zum Ein- und Ausschalten der Handwerkzeugmaschine 12 angeordnet ist. Am vorderen Ende des Gehäuses 26 der Handwerkzeugmaschine 12 ist eine Werkzeugaufnahme 31 angeordnet, die zur Aufnahme eines Einsatzwerkzeugs 32 vorgesehen ist. Zwischen dem Handgriff 28 und der Werkzeugaufnahme 31 ist eine einen Elektromotor 34 und ein Getriebe 36 aufweisende Antriebseinheit 38 angeordnet. Das Getriebe 36 umfasst eine Schlagwerkeinheit 40 und ist oberhalb des Elektromotors 34 angeordnet. Die Schlagwerkeinheit 40 umfasst ein pneumatisches Schlagwerk. Unterhalb des Elektromotors 34 ist eine Elektronik 42 angeordnet, über die die Handwerkzeugmaschine 12 regel- oder steuerbar ist. Der Akkupack 18 ist unterhalb des Handgriffs 28 und benachbart zu der Elektronik 42 angeordnet.

Der Akkupack 18 und der Verbraucher 14 weisen jeweils eine zueinander korrespondierende elektrische Schnittstelle 44, 46 auf, über die der Akkupack 18 elektrisch mit dem Verbraucher 14, insbesondere mit der Elektronik 42 des Verbrauchers 14, verbindbar ist. Im miteinander verbundenen Zustand stellt der Ackupack 18 die Energieversorgung für den Verbraucher 14 bereit. Zudem können über die elektrische Schnittstelle 46 des Akkupacks 18 Informationen und Signale ausgetauscht werden.

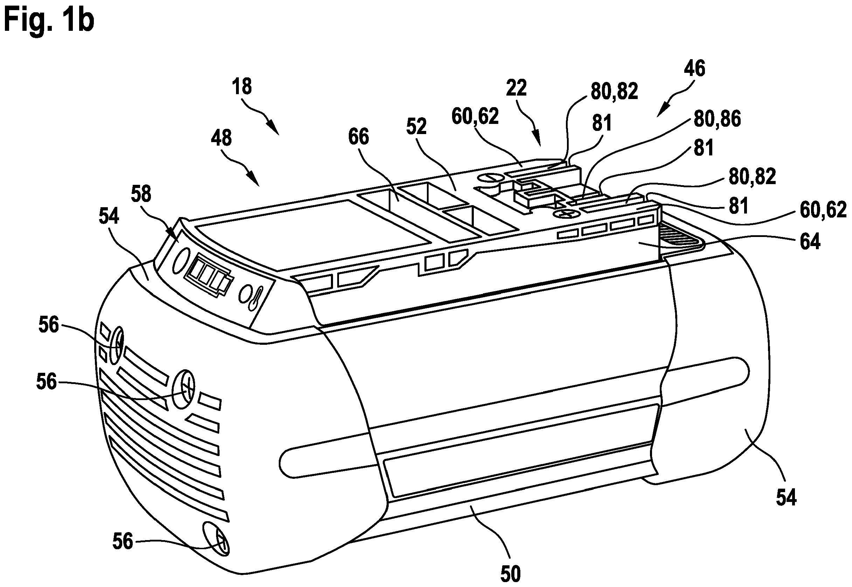

In Fig. 1b ist eine Vorderansicht des Akkupacks 18 zu sehen. Der Akkupack 18 ist über die mechanische Schnittstelle 22 mechanisch mit dem Verbraucher 14 lösbar verbunden. Der Akkupack 18 weist ein Gehäuse 48 auf, das beispielhaft mehrteilig ausgebildet ist. Das Gehäuse 48 besteht aus einem kunststoffhaltigen Gehäusematerial. Vorzugsweise ist das Gehäuse 48 aus einem Polycarbonat oder einem Polyethylen mit hoher Dichte (HD PE) ausgebildet. Das Gehäuse 48 ist insbesondere als ein Außengehäuse ausgebildet. Das Gehäuse 48 ist beispielhaft mehrteilig ausgebildet. Das Gehäuse 48 weist beispielhaft einen Zellenhalter 50, ein Schnittstellengehäuseteil 52 und zwei Seitengehäuseteile 54 auf. Die Gehäuseteile 50, 52, 54 sind über Befestigungselemente 56, die beispielhaft als Schrauben ausgebildet sind, miteinander verbunden. Die Gehäuseteile 50, 52, 54 sind alle zumindest teilweise als Außengehäuseteile ausgebildet. Es ist allerdings auch denkbar, dass der Zellenhalter 50 vollständig im Gehäuse 48 angeordnet und somit nicht als Außengehäuseteil ausgebildet ist.

Auf der Vorderseite des Akkupacks 18 ist eine Ladezustandsanzeige 58 angeordnet, über die der Ladezustand des Akkupacks 18 anzeigbar ist. Das Gehäuse 48 des Akkupacks 18, insbesondere das Schnittstellengehäuseteil 52, umfasst die mechanische Schnittstelle 22. Der Akkupack 18 ist beispielhaft als ein Schiebeakkupack ausgebildet. Der Akkupack 18 wird zur Verbindung mit der Handwerkzeugmaschine 12 entlang einer Akkuverbindungsrichtung 23 auf die Handwerkzeugmaschine 12 geschoben. (siehe Fig. la)

Die mechanische Schnittstelle 22 weist ein paar Halteelemente 60 auf, an denen der Akkupack 18 im mit der Handwerkzeugmaschine 12 verbundenen Zustand gehalten wird. Die Halteelemente 60 sind beispielhaft als Führungsschienen 62 ausgebildet. Die Halteelemente 60 erstrecken sich im Wesentlichen parallel zu der Akkuverbindungsrichtung 23 des Akkupacks 18. Angrenzend zu den Führungsschienen 62 weist der Akkupack 18 Führungsnuten 64 auf. Im mit der Handwerkzeugmaschine 12 verbundenen Zustand liegen nicht dargestellte Führungsschienen der mechanischen Schnittstelle 20 der Handwerkzeugmaschine 12 in den Führungsnuten 64 an den Führungsschienen 62 an.

Zudem weist die mechanische Schnittstelle 22 des Akkupacks 18 ein Verriegelungselement 66 auf. Das Verriegelungselement 66 beispielhaft als eine Ausnehmung im Schnittstellengehäuseteil 52 ausgebildet. Das Verriegelungselement 66 ist zur Verriegelung des Akkupacks 18 mit der Handwerkzeugmaschine 12 im verbundenen Zustand ausgebildet. Die Handwerkzeugmaschine 12 weist ein korrespondierendes Rastelement (nicht dargestellt) auf, das zur Verbindung in das Verriegelungselement 66 des Akkupacks 18 einrastet und den Akkupack 18 im verbundenen Zustand axial fixiert bzw. verriegelt. Zur Lösung dieser kraft- und formschlüssigen Verbindung weist der Verbraucher 14 ein Bedienelement (nicht dargestellt) auf.

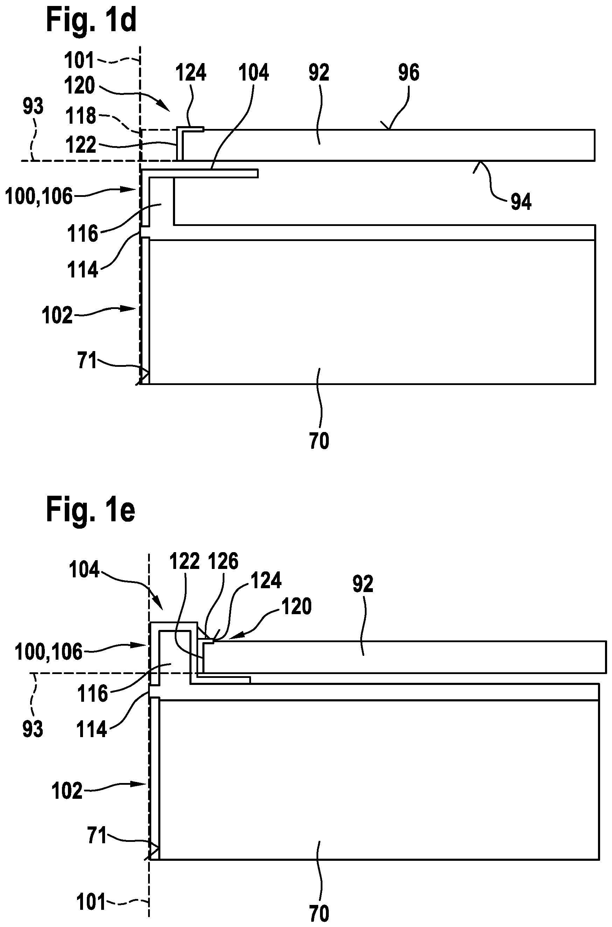

Der Akkupack 18 umfasst beispielhaft zwanzig Akkuzellen 70 (siehe Fig. 1d), die im Zellenhalter 50 angeordnet sind. Der Akkupack 18 ist als ein 36 V Akkupack ausgebildet. Der Akkupack 18 ist beispielhaft als ein vierlagiger Akkupack 18 ausgebildet. Unter einem vierlagigen Akkupack 18 soll dabei insbesondere verstanden werden, dass die Akkuzellen 70 in vier Lagen angeordnet sind, wobei innerhalb einer Lage die Akkuzellen 70 nebeneinander und/oder hintereinander im Wesentlichen auf einer Ebene angeordnet sind und innerhalb einer Lage die Anzahl der Akkuzellen 70 die Anzahl an Lagen nicht unterschreitet. Der Akkupack kann auch als einlagiger, zweilagiger oder mehrlagiger Akkupack ausgebildet sein. Die unterschiedlichen Lagen des Akkupacks 18 weisen eine unterschiedliche Anzahl an Akkuzellen 70 auf. Es ist allerdings auch denkbar, dass die Lagen eine gleiche Anzahl an Akkuzellen aufweisen.

Die elektrische Schnittstelle 46 weist beispielhaft drei elektrische Kontaktelemente 80 auf. Die drei elektrischen Kontaktelementen 80 sind im montierten Zustand zwischen den Halteelementen 60 angeordnet. Die elektrischen Kontaktelemente 80 sind zur Verbindung mit nicht dargestellten elektrischen Kontaktelementen der elektrischen Schnittstelle 44 der Handwerkzeugmaschine 12 oder einer nicht dargestellten Ladevorrichtung ausgebildet. Die elektrischen Kontaktelemente sind beispielhaft als federnde Kontaktelemente in Form von Kontakttulpen (nicht dargestellt) ausgebildet.

Das Schnittstellengehäuseteil 52 weist Ausnehmungen 81 auf, in denen die elektrischen Kontaktelemente 80 angeordnet und über welche sie zur elektrischen Verbindung zugänglich ausgebildet sind. Zwei der elektrischen Kontaktelemente 80 sind als Leistungskontakte 82 ausgebildet, über welche im Betrieb ein elektrischer Strom zur Versorgung der Handwerkzeugmaschine 12 mit Energie fließt. Beispielhaft sind die zwei äußeren elektrischen Kontakte als Leistungskontakte 82 ausgebildet.

Das mittlere elektrische Kontaktelement 80 ist als ein Zusatzkontakt 86 in Form eines Signalkontakts ausgebildet. Über den Zusatzkontakt 86 können Signale und Informationen, wie beispielsweise eine Temperaturinformation, ein Ladezustand, eine Identifikation des Akkupacks 18, etc. übertragen werden.

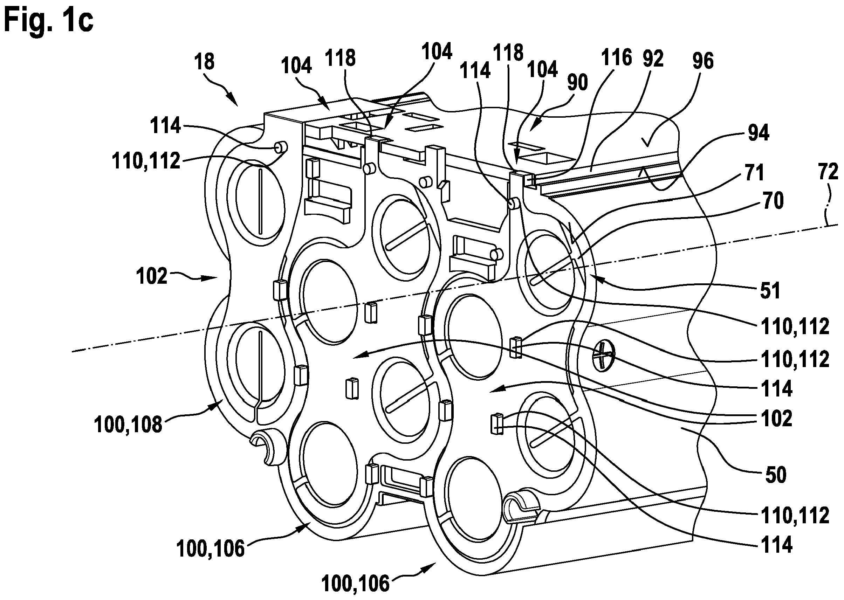

In Fig. 1c ist der Akkupack 18 ohne Gehäuse 48 in einem perspektivischen Teilschnitt gezeigt.

Der Zellenhalter 50 ist beispielhaft einstückig ausgebildet und weist zehn Ackuzellen 70 in vier übereinanderliegenden Lagen auf, die in jeweils einer Einzelzellenaufnahme 51 des Zellenhalters 50 angeordnet sind. Die Akkuzellen 70 sind als zylindrische Li-Ion Rundzellen ausgebildet und weisen stirnseitig jeweils zwei Zellpole 71 auf, die sich im Wesentlichen senkrecht zu einer Längserstreckung 72 der Akkuzellen 70 erstrecken.

Der Akkupack 18 weist eine Elektronik 90 zur Steuerung oder Regelung des Ackupacks 18 auf. Die Elektronik 90 umfasst eine Leiterplatte 92, auf der die elektrischen Kontaktelemente 80 angeordnet sind. Zudem umfasst die Leiterplatte 92 elektrische Komponenten, wie beispielsweise eine Recheneinheit in Form einer CPU und eine Speichereinheit. Die Elektronik 90 kann einen oder mehrere Sensoren, wie beispielsweise Temperatursensoren, Drucksensoren, Bewegungssensoren, Feuchtigkeitssensoren, etc. aufweisen, die auf der Leiterplatte 92 angeordnet sein können. Es ist ebenso denkbar, dass die Sensoren an einem anderen Ort innerhalb das Akkupacks 18 oder am Gehäuse 48 des Akkupacks 18 angeordnet sind. Die Leiterplatte 92 sitzt beispielhaft auf dem Zellenhalter 50 auf und ist über diesen im Gehäuse 48 des Akkupacks 18 gelagert. Die Leiterplatte 92 weist eine Unterseite 94, die den Akkuzellen 70 und/oder dem Zellenhalter 50 zugewandt ist, und eine Oberseite 96, die den Akkuzellen 70 und/oder dem Zellenhalter 50 abgewandt ist, auf.

Die Elektronik 90 umfasst ein BMS, das zur Überwachung des Akkupack 18 ausgebildet ist. Zur Überwachung werden der Elektronik 90 Informationen eines oder mehrere Temperatursensoren (nicht dargestellt) des Akkupacks 18 sowie Einzelzellspannungen der Akkuzellen 70 bereitgestellt.

Die Akkuzellen 70 sind mit der Elektronik 90, insbesondere mit der Leiterplatte 92, über Zellverbinder 100 verbunden. Die Zellverbinder 100 können dabei elektrisch zur Leistungsversorgung oder zur Einzelspannungsüberwachung mit der Elektronik 90, insbesondere der Leiterplatte 92, verbunden sein. Die mechanische Verbindung der Zellverbinder 100 kann direkt mit der Leiterplatte 92 oder indirekt mit der Leiterplatte 92, beispielsweise über eines der elektrischen Kontaktelemente 80, erfolgen. Die Zellverbinder 100 weisen jeweils ein Zellverbindungselement 102 zur elektrischen Verbindung der Akkuzellen 70 und ein Leiterplattenverbindungselement 104 zur elektrischen Verbindung mit der Leiterplatte 92 auf.

Der Akkupack 18 weist beispielhaft zwölf Zellverbinder 100 auf. In Fig. 1c sind drei Zellverbinder 100 gezeigt, wobei zwei erste Zellverbinder 106 zur Bereitstellung einer Einzelzellspannung und ein zweiter Zellverbinder 108 zur Leistungsübertragung ausgebildet ist. Die Anzahl an ersten und zweiten Zellverbinder 106, 108 ist dabei als lediglich beispielhaft anzusehen, da diese von dem Aufbau des Akkupack 18 und der Anordnung der Akkuzellen 70 im Akkupack 18 abhängig ist.

Der erste Zellverbinder 106 ist beispielhaft einstückig ausgebildet und besteht aus einem Metall, insbesondere aus Kupfer. Das Zellverbindungselement 102 des ersten Zellverbinders 106 ist stoffschlüssig mit vier Zellpolen 71 der Akkuzellen 70 verbunden. Die stoffschlüssige Verbindung erfolgt dabei beispielhaft über ein Schweißverfahren, insbesondere ein Widerstandsschweißverfahren. Somit sind über das Zellverbindungselement 102 vier Akkuzellen 70 miteinander elektrisch verbunden. Das Zellverbindungselement 102 erstreckt sich im Wesentlichen entlang einer Zellverbinderebene 101, die parallel zu den Zellpolen 71 der Akkuzellen 70 angeordnet ist.

Die Zellverbinder 100 weisen jeweils zumindest ein Positionierungselement 110 auf, das zur Positionierung der Zellverbinder 100 ausgebildet ist. Der erste Zellverbinder 100 weist beispielhaft drei Positionierungselemente 110 auf, die als Aussparungen 112 des Zellverbindungselements 102 in der Zellverbinderebene 101 ausgebildet sind. Zwei der Positionierungselemente 110 weisen eine längliche Form auf und eines der Positionierungselemente 110 weist eine kreisförmige Form auf. Der Zellenhalter 50 weist korrespondierende Positionierungselemente 114 auf, die beispielhaft einstückig mit dem Zellenhalter ausgebildet sind und sich zapfenförmig in Richtung des Zellverbinders 100 und durch diesen hindurch erstrecken.

Das Leiterplattenverbindungselement 104 des ersten Zellverbinders 106 ist stoffschlüssig mit der Leiterplatte 92 verbunden. Die Verbindung erfolgt somit direkt mit der Leiterplatte 92. Das Leiterplattenverbindungselement 104 ist im montierten Zustand hakenförmig ausgebildet. Das Leiterplattenverbindungselement 104 erstreckt sich zumindest teilweise entlang einer Leiterplattenebene 93, die von der Leiterplatte 92 aufgespannt wird. Die Leiterplattenebene 93 und die Zellverbinderebene 101 sind beispielhaft im Wesentlichen senkrecht zueinander angeordnet (siehe Fig. 1d).

Der zweite Zellverbinder 108 weist ein Zellverbindungselement 102 zur Verbindung zweier Akkuzellen 70, ein Positionierungselement 110 in der Zellverbinderebene 101 und ein Leiterplattenverbindungselement 104 auf, wobei das Leiterplattenverbindungselement 104 beispielhaft mit einem Leistungskontakt 82, und somit indirekt mit der Leiterplatte 92, verbunden ist.

Der Akkupack 18, insbesondere der Zellenhalter 50, weist zur Verbindung des Leiterplattenverbindungselements 104 mit der Leiterplatte 92 ein Montageelement 116 auf. Das Montageelement 116 ist beispielhaft einstückig mit dem Zellenhalter 50 ausgebildet. Das Montageelement 116 ist beispielhaft derart starr ausgebildet, dass es sich im Montageprozess im Wesentlichen nicht verformt. Das Montageelement 116 ist beispielhaft balkenförmig ausgebildet und erstreckt sich geradlinig in Richtung der Leiterplatte 92. Im verbundenen Zustand ist das Montageelement 116 in einer Aussparung 118 der Leiterplatte 92 angeordnet.

Die Aussparungen 118 können geschlossen oder wie beispielhaft gezeigt offen ausgebildet sein. Die offene Aussparung 118 begrenzt dabei auf zumindest einer Seite das Montageelement 116 nicht. Das Montageelement 116 weist eine Länge auf, die größer als eine Dicke der Leiterplatte 92 ist, und ragt somit auf der Oberseite 96 der Leiterplatte 92 hinaus.

In Fig. 1d ist der Akkupack 18 vor der Montage der Leiterplatte 92 in einer schematischen Ansicht gezeigt.

Die Leiterplatte 92 weist eine Verbindungsstelle 120 auf, die zur elektrischen Verbindung des Zellverbinders 100 mit der Leiterplatte 92 ausgebildet ist. Die Leiterplatte 92 weist beispielhaft nicht dargestellte Leiterbahnen auf, die elektrisch mit der Elektronik 90 des Akkupacks 18 verbunden sind. Die Aussparung 118 der Leiterplatte 92 umfasst beispielhaft eine Kantenmetallisierung 122, die der Verbindungsstelle 120 zugeordnet ist. Die Kantenmetallisierung 122 ist beispielhaft aus Kupfer ausgebildet. Zudem umfasst die Verbindungsstelle 120 eine Kontaktfläche 124 auf der Oberseite 96 der Leiterplatte 92, die beispielhaft ebenfalls aus Kupfer ausgebildet ist. Alternativ ist auch denkbar, dass die Verbindungsstelle 120 nur die Kantenmetallisierung 122 oder nur die Kontaktfläche 124 umfasst.

Vor der Montage wird der Zellverbinder 100 mit dem Zellenhalter 50 derart verbunden, dass eine Lateralbewegung innerhalb der Zellverbinderebene 101 im Wesentlichen durch die Positionierungselemente 110, 114 unterbunden wird. Der Zellverbinder 100 wird derart gebogen, dass das Leiterplattenverbindungselement 104 sich im Wesentlichen senkrecht zu der Zellverbinderebene 101 erstreckt. Das Leiterplattenverbindungselement 104 liegt auf dem Montageelement 116 auf. Die Leiterplatte 92 wird im Anschluss derart positioniert, dass die Aussparung 118 oberhalb des Montageelements 116 angeordnet ist.

Im Anschluss wird die Leiterplatte 92 montiert. In Fig. 1e ist die Leiterplatte 92 im montierten Zustand gezeigt. Die Montage erfolgt dabei über ein Aufsetzen oder ein Aufpressen der Leiterplatte 92 auf den Zellenhalter 50. Der Zellverbinder 100, insbesondere das Leiterplattenverbindungselement 104, wird dabei zwischen der Leiterplatte 92 und dem Montageelement 116 verformt. Nach der Verformung weist das Leiterplattenverbindungselement 104 eine hakenförmige Form auf und umschließt das Montageelement 116 auf drei angrenzenden Seiten. Das Leiterplattenverbindungselement 104 ist somit in der Aussparung 118 zwischen dem Montageelement 116 und der Leiterplatte 92 angeordnet. Das Leiterplattenverbindungselement 104 liegt an der Verbindungsstelle 120, insbesondere an der Kantenmetallisierung der Aussparung 118, an.

Die stoffschlüssige Verbindung erfolgt im Anschluss über eine Lötverbindung. Das Stoffschlussmittel 126 für die stoffschlüssige Verbindung kann während des Lötens oder vorab auf der Verbindungsstelle 120 aufgebracht werden. Durch die stoffschlüssige Verbindung wird der Zellverbinder 100, insbesondere das Leiterplattenverbindungselement 104 des Zellverbinders 100, elektrisch und mechanisch mit der Leiterplatte 92, insbesondere der Verbindungsstelle 120 der Leiterplatte 92 verbunden. Die Verbindung erfolgt dabei hauptsächlich über die Kantenmetallisierung 122 der Aussparung 118 der Leiterplatte 92.

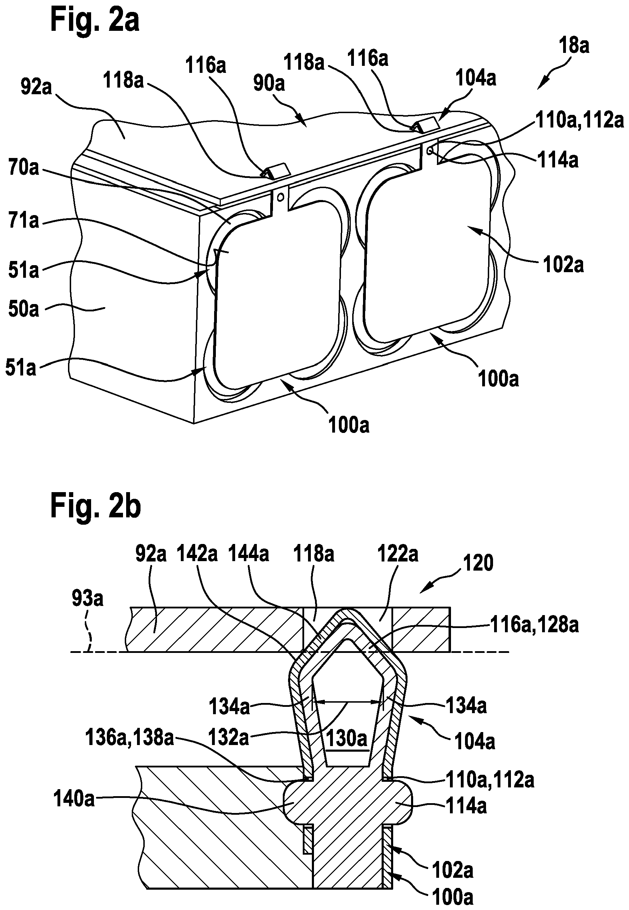

In Fig. 2a ist eine alternative Ausführungsform des Akkupacks 18a mit einer alternativen Ausgestaltung eines Zellverbinders 100a in einer schematischen perspektivischen Teilansicht ohne Gehäuse gezeigt. Die Zellverbinder 100a können zur Leistungsübertragung oder zur Bereitstellung einer Einzelzellspannung ausgebildet sind.

Gezeigt sind acht Akkuzellen 70a, die in einem Zellenhalter 50a aufgenommen sind. Die Akkuzellen 70a sind dabei wie zuvor beschrieben in jeweils einer Einzelzellenaufnahme 51a aufgenommen, wobei die Akkuzellen 50a in der Einzelzellenaufnahme 51a entlang ihrer Längserstreckung bzw. entlang ihrer Mantelfläche im Wesentlichen vollständig von dem Zellenhalter 50a umschlossen sind. Der Zellenhalter 50a ist beispielhaft aus einem elektrisch isolierenden Material, insbesondere einem Kunststoff, ausgebildet.

Auf dem Zellenhalter 50a ist die Leiterplatte 92a, die der Elektronik 90a zugeordnet ist, angeordnet. Die Leiterplatte 92a weist Aussparungen 118a auf, über die die Leiterplatte 92a mit den Zellverbindern 100a verbindbar ist. Die Zellverbinder 100a weisen jeweils ein Positionierungselement 110a auf, das als eine kreisförmige Aussparung 112a ausgebildet ist. Der Zellenhalter 50a weist ein korrespondierendes Positionierungselement 114a in Form eines Zapfens auf, das stirnseitig absteht und in die kreisförmige Aussparung 112a eingreift.

Jeweils vier Akkuzellen 70a sind über ihre Zellpole 71a über ein Zellverbindungselement 102a der Zellverbinder 100a miteinander elektrisch verbunden. Die Verbindung erfolgt dabei beispielhaft über ein Laserschweißverfahren.

Der Akkupack 18a weist ein Montageelement 116a, das beispielhaft einstückig mit dem Zellenhalter 50a ausgebildet und in der Aussparung 118a der Leiterplatte 92a angeordnet ist.

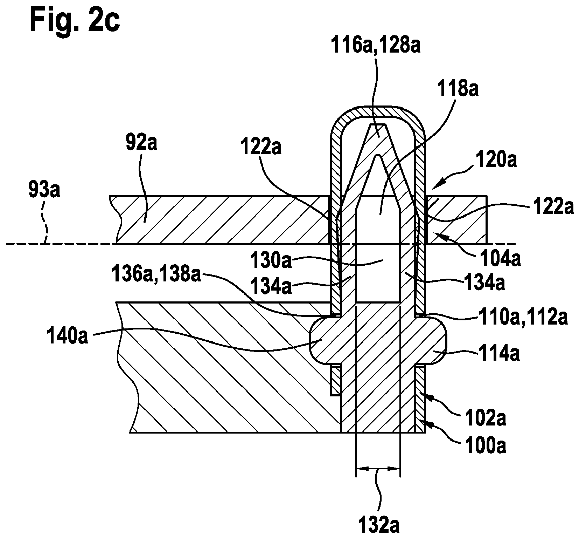

Die Verbindung des Zellverbinders 100a mit der Leiterplatte 92a erfolgt über eine Einpresszone. In Fig. 2b ist der Montageprozess vor dem Einpressvorgang und in Fig. 2c nach dem Einpressvorgang schematisch gezeigt.

Die Aussparung 118a der Leiterplatte 92a weist wie zuvor beschrieben eine Verbindungsstelle 120a mit einer Kantenmetallisierung 122a auf. Die Aussparung 118a ist geschlossen ausgebildet und umschließt das Montagelement 116a radial vollständig.

Der Zellverbinder 100a ist beispielhaft aus Kupfer mit einer Dicke von ca. 0,3 mm ausgebildet. Zudem ist der Zellverbinder 100a einstückig ausgebildet. Der Zellverbinder 100a ist durch die Materialwahl und die Dicke derart weich ausgebildet, dass es für sich keine ausreichend hohe Elastizität aufweist, die für eine Verbindung des Zellverbinders 100a mit der Leiterplatte 92a über eine Einpresszone genügt.

Das Montageelement 116a ist dazu ausgebildet, die für die Einpresszone benötigte Elastizität bzw. Kraft für den Zellverbinder 100a, insbesondere für das Leiterplattenverbindungselement 104a, bereitzustellen.

Das Montageelement 116a ist hierzu als ein Federelement 128a ausgebildet. Das Montageelement 116a ist insbesondere elastisch in Richtung der Leiterplattenebene 93a ausgebildet. Das Montageelement 116a weist beispielhaft einen Hohlraum 130a auf, der entlang der Leiterplattenebene 93a eine maximale Breite 132a zwischen zwei den Hohlraum 130a begrenzenden Federarmen 134a aufweist, die größer als eine Wandstärke der Federarme 134a, insbesondere größer ist als das Dreifache der Wandstärke der Federarme 134a, ist.

Das Leiterplattenverbindungselement 104a wird zur Montage an einer Außenfläche des Montageelements 116a angelegt, sodass das Leiterplattenverbindungselement 104a an unterschiedlichen, insbesondere gegenüberliegenden, Seiten an dem Montageelement 116a anliegt.

Das Leiterplattenverbindungselement 104a weist ein weiteres Positionierungselement 136a auf, das beispielhaft als eine insbesondere kreisförmige Aussparung 138a ausgebildet ist. Das weitere Positionierungselement 136a ist dazu ausgebildet, während des Einpressvorgangs die Position des Leiterplattenverbindungselements 104a zu fixieren. Der Zellenhalter 50a weist ein korrespondierendes weiteres Positionierungselement 140a auf, das auf einer dem ersten Positionierungselement 114a gegenüberliegenden Seite angeordnet ist.

Das Leiterplattenverbindungselement 104a, vorzugsweise das Leiterplattenverbindungselement 104a und das Montageelement 116a, weisen eine Breite entlang der Leiterplattenebene 93a auf, die größer als eine Breite der Aussparung 118a der Leiterplatte 92 ausgebildet ist.

Beim Einpressvorgang wird die Leiterplatte 92a auf das Leiterplattenverbindungselement 104a gepresst. Dabei trifft eine Kante 142a der Aussparung der Leiterplatte 92a auf eine Schräge 144a des Leiterplattenverbindungselements 104a und beaufschlagt diese mit einer Kraft. Die Schräge 144a ist insbesondere derart ausgebildet, dass eine im Wesentlichen senkrecht zu der Leiterplattenebene 93a wirkende Kraft zumindest teilweise in ein radial nach innen gerichtet Kraft umgewandelt wird und das Leiterplattenverbindungselement 104 und das Montageelement 116a staucht. Die Schräge 144a weist beispielhaft eine konstante Steigung auf, die bezogen auf die Leiterplattenebene 93a bevorzugt in einem Bereich zwischen 30° und 60° liegt.

Durch die einwirkende Kraft wird das Leiterplattenverbindungselement 104a und das Montageelement 116a derart verformt, dass das Leiterplattenverbindungselement 104a mit dem Montageelement 116a in die Aussparung 118a der Leiterplatte 92a führbar ist und durch diese durchtaucht.

Das Leiterplattenverbindungselement 104a für sich wird dabei plastisch verformt, während das Montageelement 116a elastisch verformt wird. Durch das innenliegende Montageelement 116a wird das Leiterplattenverbindungselement 104a mit einer radial nach außen gerichteten Kraft beaufschlagt, wodurch das Leiterplattenverbindungselement 104a ebenfalls eine elastische Komponente erhält.

Das Federelement 128a bzw. das Montageelement 116a ist derart steif ausgebildet, dass die von dem Montageelement 116a ausgeübte Kraft zu einer stabilen mechanischen und elektrischen Verbindung zwischen dem Leiterplattenverbindungselement 104a und der Leiterplatte 92a führt.

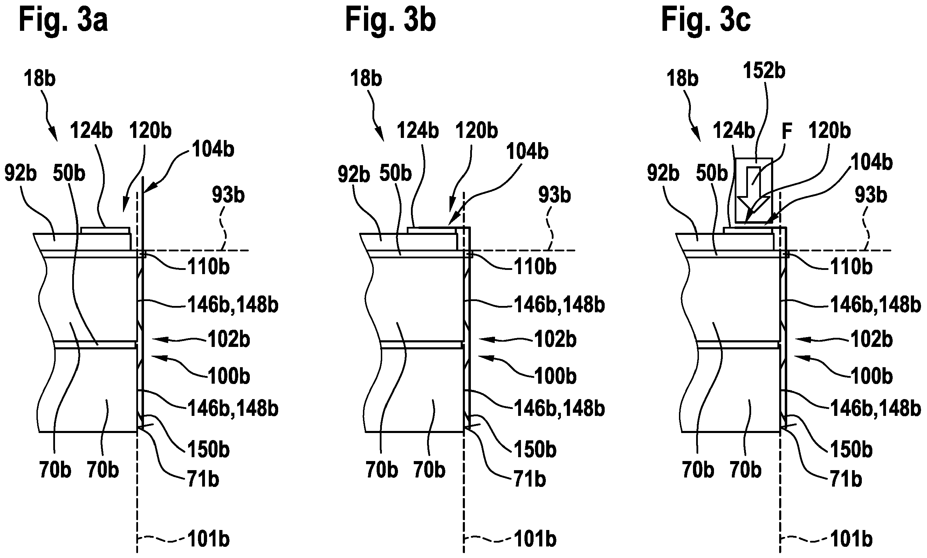

In Fig. 3a bis Fig. 3c ist eine schematische Teilansicht eines Montageverfahren gezeigt, bei dem ein Zellverbinder 100b mittels eines Heizstempel-Verfahrens stoffschlüssig mit einer Leiterplatte 92b verbunden wird. Der Akkupack 18b kann grundsätzlich wie die zuvor beschriebenen Akkupacks 18, 18a ausgebildet sein, wobei der Zellverbinder 100b zur Leistungsübertragung oder zur Überwachung einer Einzelzellenspannung ausgebildet sein kann.

Der Zellverbinder 100b weist ein Zellverbindungselement 102b auf, das zur elektrischen Verbindung von zwei Akkuzellen 70b ausgebildet ist. Der Stoffschluss zwischen dem Zellverbinder 100b und den Akkuzellen 70b, insbesondere den Zellpolen 71b der Akkuzellen 70b, erfolgt dabei über jeweils über eine Verbindungsfläche 146b des Zellverbinders 100b, die beispielhaft vollständig an dem Zellpol 71b der Akkuzelle 70b anliegt. Somit entspricht ein Berührungsbereich 148b in dieser Ausführungsform im Wesentlichen der Verbindungsfläche 146b.

Das Zellverbindungselement 102b ist im Bereich der Verbindungsflächen 146b beispielhaft topfförmig ausgebildet, wobei die Verbindungsfläche 146b einen Boden des Topfes bildet, der von einer zylindrischen Wandung 150b umschlossen wird.

Der Zellverbinder 100b wird zur Montage zunächst mittels eines Positionierungselements 110b auf dem Zellenhalter 50b positioniert. Der Zellverbinder 100b ist beispielhaft einstückig ausgebildet. Sowohl das Leiterplattenverbindungselement 104b als auch das Zellverbindungselement 102b erstrecken sich vor der Montage im Wesentlichen vollständig entlang der Zellverbinderebene 101b.

Die Leiterplatte 92b ist auf dem Zellenhalter 50b angeordnet. Die Leiterplatte 92b weist auf der Oberseite 96b, die den Akkuzellen 70b abgewandt ist, eine Verbindungsstelle 120b auf, die zur Verbindung mit dem Zellverbinder 100b, insbesondere dem Leiterplattenverbindungselement 104b des Zellverbinders 100b, vorgesehen ist. Die Verbindungsstelle 120b ist dabei nur auf der Oberseite 96b der Leiterplatte 92b angeordnet. Die Verbindungsstelle 120b weist eine Kontaktfläche 124b zur Herstellung einer Lötverbindung, beispielhaft in Form eines Kontaktpads, insbesondere eines Kupferkontaktpads, auf.

Nach der Positionierung wird der Zellverbinder 100b händisch oder mittels einer nicht dargestellten Montagevorrichtung umgebogen und verformt. Beispielhaft wird der Zellverbinder 100b um 90° umgebogen, sodass das Leiterplattenverbindungselement 104b des Zellverbinders 100b sich im Wesentlichen parallel zu der Leiterplattenebene 93b erstreckt. Der Zellverbinder 100b wird derart umgebogen, dass das Leiterplattenverbindungselement 104b auf der Verbindungsstelle 120b, insbesondere dem Kontaktpad 124b anliegt. Alternativ ist auch denkbar, dass das Leiterplattenverbindungselement 104b einen gewissen Abstand zu der Verbindungsstelle 120b aufweist. Der Akkupack 18b weist ein nicht dargestelltes Zellverbinderführungselement auf, das zur Führung des Zellverbinders beim Umbiegen während des Montageprozesses ausgebildet ist.

Im Anschluss erfolgt der Stoffschluss mittels des Heizstempel-Verfahrens. Eine Heizstempelvorrichtung 152b wird erhitzt und beaufschlagt insbesondere unter Krafteinwirkung das Leiterplattenverbindungselement 104b oberhalb der Verbindungsstelle 120b, vorzugsweise oberhalb der Kontaktfläche 124b zur Herstellung der Lötverbindung.

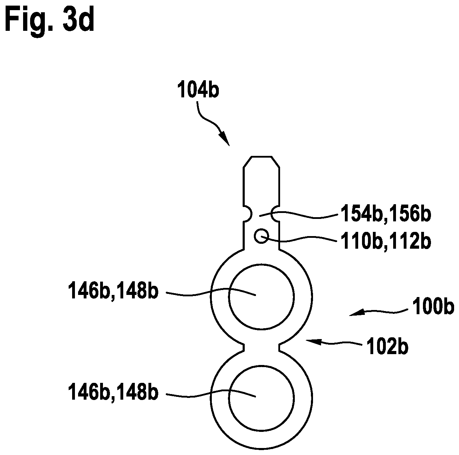

In Fig. 3d ist eine Seitenansicht des Zellverbinders 100b gezeigt. Der Zellverbinder 100b weist zwischen dem Leiterplattenverbindungselement 104b und dem Zellverbindungselement 102b eine Biegehilfe 154b auf, die zur Unterstützung des Biegevorgangs vorgesehen ist. Die Biegehilfe 154b ist beispielhaft als eine Verjüngung 156b ausgebildet. Die Biegehilfe 154b in Form einer Materialreduzierung im Umbiegebereich ist dabei für plastisch schwer verformbare Zellverbinder 100b vorgesehen. Die Biegehilfe kann auch durch Wahl des Materials sowie die Materialdicke realisiert werden, in dem ein mit geringem Kraftaufwand umbiegbarer Bereich zwischen dem Leiterplattenverbindungselement 104b und dem Zellverbindungselement 102b erzeugt wird.

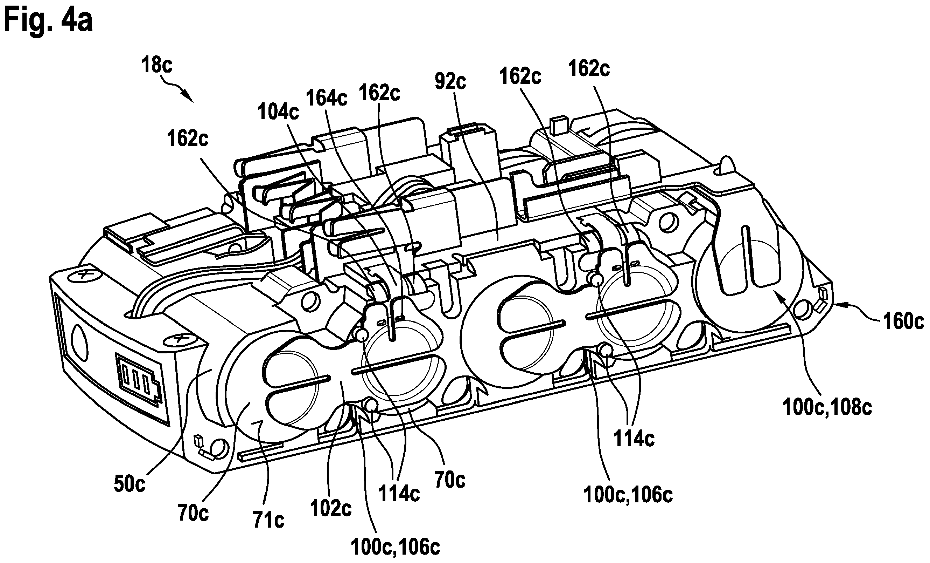

In Fig. 4a ist eine weitere Ausführungsform eines Akkupack 18c mit Zellverbindern 100c in einer perspektivischen Ansicht ohne das vollständige Gehäuse des Akkupacks 18c gezeigt.

Der Akkupack 18c ist als ein einlagiger Akkupack 18c mit fünf Akkuzellen 70c ausgebildet. Die Akkuzellen 70c sind in einem Zellenhalter 50c elektrisch isoliert und thermisch gekoppelt aufgenommen.

Der Akkupack 18c umfasst beispielhaft sechs Zellverbinder 100c, wobei jeweils drei Zellverbinder 100c auf einer Seite angeordnet sind. Insbesondere weist der Akkupack 18c je Seite zwei erste Zellverbinder 106c zur Überwachung einer Einzelzellenspannung und einen zweiten Zellverbinder 108c zur Leistungsübertragung auf.

Die Zellverbinder 100c sind im montierten Zustand einteilig ausgebildet, wobei das Zellverbindungselement 102c und das Leiterplattenverbindungselement 104c aus unterschiedlichen Bauteilen ausgebildet und miteinander stoffschlüssig verbunden sind.

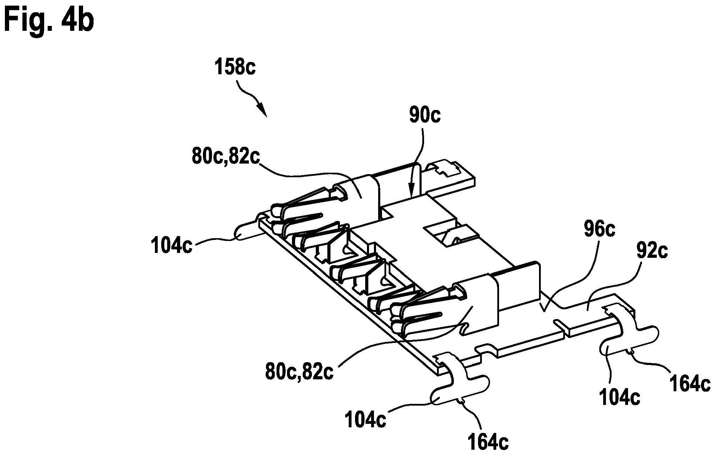

In Fig. 4b ist die Leiterplatte 92c des Akkupacks 18c, auf der die elektrischen Kontaktelemente 80c und die Elektronik 90c angeordnet ist in einer perspektivischen Ansicht gezeigt.

Die Leiterplatte 92c ist über einen Stoffschluss mit dem Leiterplattenverbindungselement 104c verbunden. Der Stoffschluss erfolgt dabei mittels einer Lötverbindung auf der Oberseite 96c der Leiterplatte 92c. Die mit den Leiterplattenverbindungselementen 104c verbundene Leiterplatte 92c bildet ein erste Montagemodul 158c aus. Das Leiterplattenverbindungselement 104c weist einen ersten Stoffschlussbereich auf, über den das Leiterplattenverbindungselement 104c mit der Leiterplatte 92 mittels einer Lötverbindung verbunden ist. Zudem weist das Leiterplattenverbindungselement 104c einen zweiten Stoffschlussbereich auf, der zur stoffschlüssigen Verbindung des Leiterplattenverbindungselements 104c mit dem Zellverbindungselement 102c mittels eines Stoffschlusses vorgesehen ist. Der erste Stoffschlussbereich und der zweite Stoffschlussbereich des Leiterplattenverbindungselements 104c erstrecken sich beispielhaft entlang unterschiedlicher Ebenen. Der erste Stoffschlussbereich erstreckt sich im Wesentlichen entlang der Leiterplattenebene und der zweite Stoffschlussbereich erstreckt sich im Wesentlichen entlang der Zellverbinderebene.

Das erste Montagemodul 158c wird mit einem zweiten Montagemodul 160c verbunden. Das zweite Montagemodul 160c umfasst den Zellenhalter 50c mit eingesetzten Akkuzellen 70c.

Der Akkupack 18c, vorzugsweise der Zellenhalter 50c, weist Positionierungselemente 162c auf, die zur Positionierung bzw. Fixierung des Leiterplattenverbindungselements 104c bzw. des ersten Montagemoduls 158c auf dem zweiten Montagemodul 160c ausgebildet sind. Die Positionierungselemente 162c sind als Formschlusselemente ausgebildet, die zur Ausbildung eines Hinterschnitts zwischen dem ersten Montagemodul 158c und dem zweiten Montagemodul 160c vorgesehen ist.

In einem nächsten Montageschritt wird das Zellverbindungselement 102c auf den Montagemodulen 158c, 160c positioniert, wobei der Akkupack 18c mehrere Positionierungselemente 114c zur Positionierung des Zellverbindungselements 104c aufweist. Zudem weist auch das Leiterplattenverbindungselement 104c ein Positionierungselement 164c auf, das in ein korrespondierendes Positionierungselement des Zellverbindungselements 102c eingreift. Das Leiterplattenverbindungselement 104c und die Zellpole 71c der zu verbindenden Akkuzellen 70c sind dabei auf der gleichen Seite des Zellverbindungselements 102c angeordnet. Somit überlappen sich das Leiterplattenverbindungselement 104c und das Zellverbindungselement 102c im montierten Zustand teilweise.

Das Zellverbindungselement 102c wird mit den Akkuzellen 70c über einen ersten Stoffschluss und mit dem Leiterplattenverbindungselement 104c über einen zweiten Stoffschluss verbunden, wobei der erste Stoffschluss und der zweite Stoffschluss über die gleiche Verbindungstechnik erfolgen. Beispielhaft ist die Verbindungstechnik ein Schweißverfahren, vorzugsweise eine Widerstandsschweißverfahren mittels jeweils zweier Schweißpunkte. Alternativ ist auch ein Laserschweißverfahren oder auch ein Lötverfahren denkbar. Der erste und der zweite Stoffschluss erfolgen dabei im Wesentlichen auf derselben Ebene, insbesondere der Zellverbinderebene 101c. Vorteilhaft kann dadurch der Montageprozess vereinfacht und beschleunigt werden.

Die Werkstoffe des Leiterplattenverbindungselements 104c und des Zellverbindungselements 102c werden derart gewählt, dass der erste Stoffschluss und der zweite Stoffschluss über die gleiche Verbindungstechnik möglich sind, beispielsweise eine Kupfer-Zinn- oder eine Kupfer-Zink-Legierung. Das Leiterplattenverbindungselement 104c und das Zellverbindungselement 102c können aus unterschiedlichen oder im Wesentlichen dem gleichen Werkstoff ausgebildet sein.

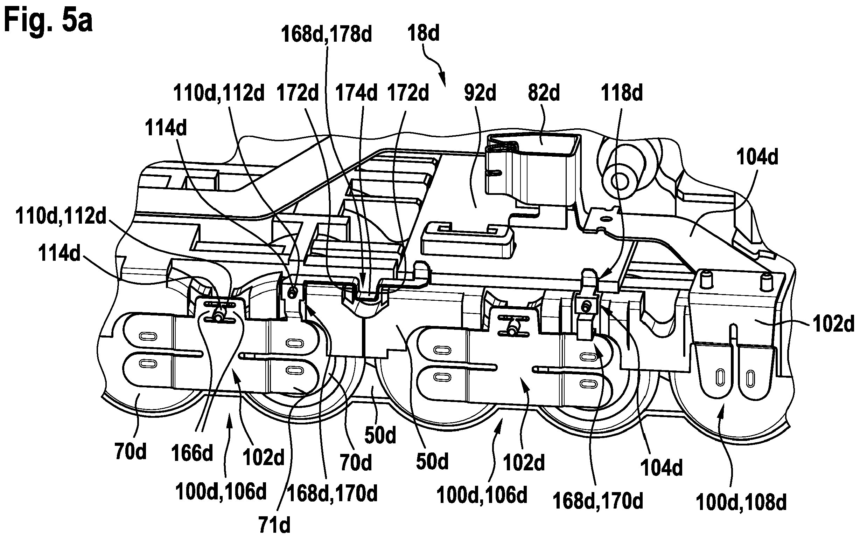

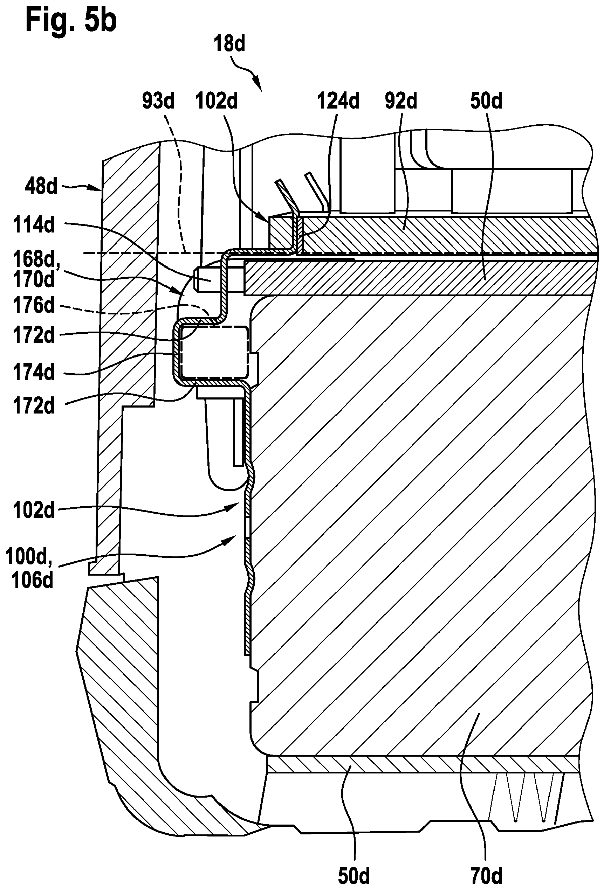

In Fig. 5a ist eine weitere Ausführungsform eines Akkupacks 18d mit Zellverbindern 100d in einer perspektivischen Ansicht ohne das Gehäuse 48d (siehe Fig. 5b) gezeigt.

Der Akkupack 18d ist als ein einlagiger Akkupack 18d mit fünf Akkuzellen 70d ausgebildet. Die Akkuzellen 70d sind in einem Zellenhalter 50d aufgenommen. Der Zellenhalter 50d ist zweiteilig ausgebildet, wobei zwischen den zwei Komponenten Hohlräume angeordnet sind. Im Bereich der Hohlräume sind zwischen zwei benachbarten Akkuzellen 70d nur ein Luftspalt angeordnet.

Der Akkupack 18d umfasst beispielhaft sechs Zellverbinder 100d, wobei jeweils drei Zellverbinder 100d auf einer Seite angeordnet sind. Insbesondere weist der Akkupack 18d je Seite zwei erste Zellverbinder 106d zur Überwachung einer Einzelzellenspannung und einen zweiten Zellverbinder 108d zur Leistungsübertragung auf.

Die ersten Zellverbinder 106d sind einstückig und die zweiten Zellverbinder 108d sind einteilig, bestehend aus zwei Komponenten, ausgebildet.

Die ersten Zellverbinder 106d weisen ein Zellverbindungselement 102d auf, das über einen Stoffschluss zwei Akkuzellen 70d miteinander verbindet. Der Stoffschluss erfolgt beispielsweise über eine Schweißverbindung. Zudem weisen die ersten Zellverbinder 108d ein Leiterplattenverbindungselement 104 auf, das über einen Stoffschluss mit der Leiterplatte 92d des Akkupacks 18d verbunden ist. Der Stoffschluss erfolgt beispielhaft über eine Lötverbindung mit einer Kantenmetallisierung 122d einer Aussparung 118d der Leiterplatte 92d (siehe Fig. 5b).

Die ersten Zellverbinder 106d weisen beispielhaft jeweils zwei Positionierungselemente 110d auf. Die Positionierungselemente 110d sind in Form von Aussparungen 112d ausgebildet. Die Positionierungselemente 110d sind zur formschlüssigen Verbindung der Zellverbinder 100d mit dem Zellenhalter 50d ausgebildet, wobei die Positionierungselemente 110d derart ausgebildet sind, dass der Zellverbinder nur über eine translatorische Bewegung lösbar ist. Zur Montage werden somit die Zellverbinder 106d seitlich entlang der Längserstreckung 72d der Akkuzellen 70d auf korrespondierende Positionierungselemente 114d des Zellenhalters 50d in Form von Pins aufgesetzt.

Zusätzlich weist jeweils eines der Positionierungselemente 110d ein Rückstellmittel 166d auf, das den Zellenhalter 50d, insbesondere das korrespondierende Positionierungselement 114d des Zellenhalters 50, mit einer Kraft, beispielhaft mit einer Kraft in radialer Richtung, beaufschlagt. Die Rückstellmittel 166d sind beispielhaft als Federbleche ausgebildet, die die Größe der Aussparung 114 reduzieren und beim Verbindungsprozess teilweise verbogen werden. Vorteilhaft wird dadurch mittels des Positionierungselements 110d eine laterale Bewegung des Zellverbinders 100d unterbunden und ein abziehen bzw. aufstecken durch Reibung erschwert.

Im Falle einer starken mechanischen Krafteinwirkung auf den Akkupack 18d, beispielsweise im Falle eines Sturzes, kann bei starr verbundenen Zellverbindern 100d eine Beschädigung im Bereich der Stoffschlüsse erfolgen. Um diesem Effekt entgegenzuwirken, weisen die ersten Zellverbinder 106d jeweils zumindest ein Zugentlastungselement 168d auf.

Der mittlere Zellverbinder 100d weist ein einziges Zugentlastungselement 168d auf, das als ein vertikales Zugentlastungselement 170d ausgebildet ist. Das vertikale Zugentlastungselement 170d ist zwischen dem Leiterplattenverbindungselement 104d und dem Zellverbindungselement 102d, insbesondere zwischen den beiden Stoffschlüssen mit den Akkuzellen 70d und der Leiterplatte 92d, angeordnet.

Die Zugentlastungselemente 168d sind beispielhaft stufenförmig, insbesondere U-förmig, ausgebildet. In Fig. 5b ist das vertikale Zugentlastungselement 170d in einem Querschnitt gezeigt. Die Zugentlastungselemente 168d weisen zwei elastische Arme 172d auf, die über einen Rücken 174d miteinander verbunden sind. Im entspannten Zustand sind die Arme 172d und der Rücken 174d senkrecht bzw. parallel zueinander angeordnet. Zwischen den beiden Armen 172d ist im montierten Zustand ein Hohlraum 176d angeordnet, sodass die Zugentlastungselemente 168d auch im montierten Zustand elastisch sind.

Die Zugentlastungselemente 168d, insbesondere die Arme 172d der Zugentlastungselemente 168d, erstrecken sich quer, insbesondere senkrecht, zur Wirkrichtung der Zugentlastungselemente 168. Der Rücken 174d des Zugentlastungselements 168d erstreckt sich im Wesentlichen entlang der Wirkrichtung des Zugentlastungselements 168d.

Das vertikale Zugentlastungselements 170d ist derart angeordnet, dass sich die Arme 172d der vertikalen Zugentlastungselemente 170d im Wesentlichen parallel zu der Leiterplattenebene 93d erstrecken. Die über den Zellverbinder 100d mit dem vertikalen Zugentlastungselement 170d mit der Leiterplatte 92d verbundenen Akkuzellen 70d liegen unmittelbar unterhalb der Leiterplatte 92d und werden somit bei einer Relativbewegung der Akkuzellen 70d auf die Leiterplatte 92d zu oder von dieser weg durch eine elastische Verformung des Zugentlastungselements 168d geschützt.

Der linke Zellverbinder 100d weist zwei Zugentlastungselemente 168d auf. Ein vertikales Zugentlastungselement 170d wie zuvor beschrieben und ein weiteres horizontales Zugentlastungselement 178d.

Das horizontale Zugentlastungselement 178d weist ebenfalls zwei federnde Arme 172d auf, die über einen Rücken 174d miteinander verbunden sind. Die Arme 172d erstrecken sich dabei im Wesentlichen senkrecht zu der Leiterplattenebene 93d und der Rücken 174d erstreckt sich im Wesentlichen parallel zu der Leiterplattenebene 93b.

Die über den Zellverbinder 100d mit dem horizontalen Zugentlastungselement 178d mit der Leiterplatte 92d verbundenen Akkuzellen 70d liegen versetzt unterhalb der Leiterplatte 92d und werden somit bei einer Relativbewegung der Ackuzellen 70d auf die Leiterplatte 92d zu oder von dieser weg durch eine elastische Verformung des Zugentlastungselements 168d geschützt.

Das vertikale Zugentlastungselement 170d und das horizontale Zugentlastungselement 178d weisen somit unterschiedliche, insbesondere senkrecht zueinanderstehende, Wirkrichtungen auf. Das vertikale Zugentlastungselement 170d erstreckt sich im Wesentlichen von den Akkuzellen 70d weg, insbesondere in Richtung des Gehäuses 48d. Das horizontale Zugentlastungselement 178d erstreckt sich auf die Akkuzellen 70d zu.

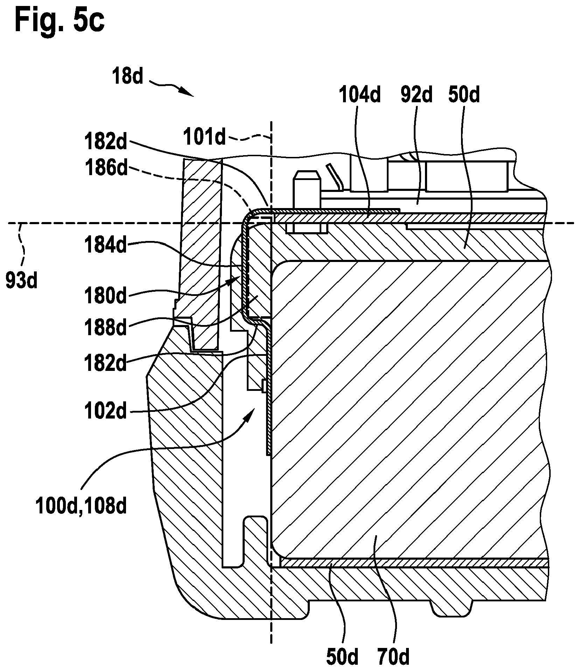

Der zweite Zellverbinder 108d besteht aus dem Leiterplattenverbindungselement 104d und dem Zellverbindungselement 102d und ist in Fig. 5c in einem Querschnitt gezeigt. Das Leiterplattenverbindungselement 104d ist stoffschlüssig mit einem Leistungskontakt 82d auf der Leiterplatte 92d verbunden. Das Zellverbindungselement 102d ist mit einer einzigen Akkuzelle 70d stoffschlüssig über ein Widerstandsschweißverfahren verbunden.

Das Leiterplattenverbindungselement 104d erstreckt sich im Wesentlichen vollständig entlang bzw. parallel zu der Leiterplattenebene 93d. Das Zellverbindungselement 102d erstreckt sich sowohl entlang der Zellverbinderebene 101d als auch teilweise entlang der Leiterplattenebene 93d, sodass sich das Leiterplattenverbindungselement 104d und das Zellverbindungselement 102d teilweise überlappen. Sowohl das Leiterplattenverbindungselement 104d als auch das Zellverbindungselement 102d weisen Positionierungselemente 110d in Form kreisförmiger Aussparungen 112d auf, die zur Positionierung von einem Positionierungselement 114d des Zellenhalters 50d in Form eines Pins gehalten werden. Das Zellverbindungselement 102d wird nach dem Leiterplattenverbindungselement 104d montiert. Dadurch ist das Leiterplattenverbindungselement 104d zwischen dem Zellverbindungselement 102d und dem Zellenhalter 50d angeordnet und wird durch das Zellverbindungselement 102d gegen ein Lösen verriegelt.

Das Leiterplattenverbindungselement 104d ist mit dem Zellverbindungselement 102d über einen Stoffschluss, insbesondere über ein Schweißverfahren verbunden. Der Stoffschluss erfolgt nicht auf der Seite der Zellpole 71d, sondern auf einer im Wesentlichen senkrecht zu der Zellverbinderebene 101d angeordneten Seite.

Zur Vereinfachung der Montage weist der zweite Zellverbinder 108d, insbesondere das Zellverbindungselement 102d des zweiten Zellverbinders 108d, ein Verriegelungselement 180d auf. Das Verriegelungselement 180d ist derart ausgebildet, dass ein Lösen des Zellverbindungselements 102d, insbesondere vor einer stoffschlüssigen Verbindung mit der Akkuzelle 70d oder mit dem Leiterplattenverbindungselement 104d, nicht über eine translatorische Bewegung möglich ist.

Das Verriegelungselement 180d ist stufenförmig ausgebildet und weist zwei gegenüberliegende Arme 182d auf, die über einen Rücken 184d miteinander verbunden sind. Die Arme 182d und der Rücken 184d begrenzen einen Hohlraum 186d, der im Unterschied zu dem zuvor beschriebenen Zugentlastungselement 168d im montierten Zustand zumindest teilweise ein Anschlagselement 188d aufnimmt. Das Anschlagselement 188d ist beispielhaft einstückig mit dem Zellenhalter 50d ausgebildet. Das Verriegelungselement 180d liegt im montierten Zustand an zumindest einer, beispielsweise an zwei angrenzenden Seiten des Anschlagselements 188d im Wesentlichen an. Durch das Positionierungselement 114d des Zellenhalters wird somit eine translatorische Bewegung des Zellverbindungselements 102d entlang der Leiterplattenebene 93b im Wesentlichen verhindert. Durch Anschlagselement 188d wird zudem eine translatorische Bewegung des Zellverbindungselements 102d senkrecht zu der Leiterplattenebene 93d verhindert. Um die Montierbarkeit zu gewährleisten, sind die Positionierungselemente 110d und das Verriegelungselement 180d derart ausgelegt, dass eine Bewegung mit einem gewissen Spiel möglich ist. Die Montage des Zellverbindungselements 102d erfolgt über einen Schwenkvorgang, bei dem das Zellverbindungselement 102d teilweise elastisch verformt wird.

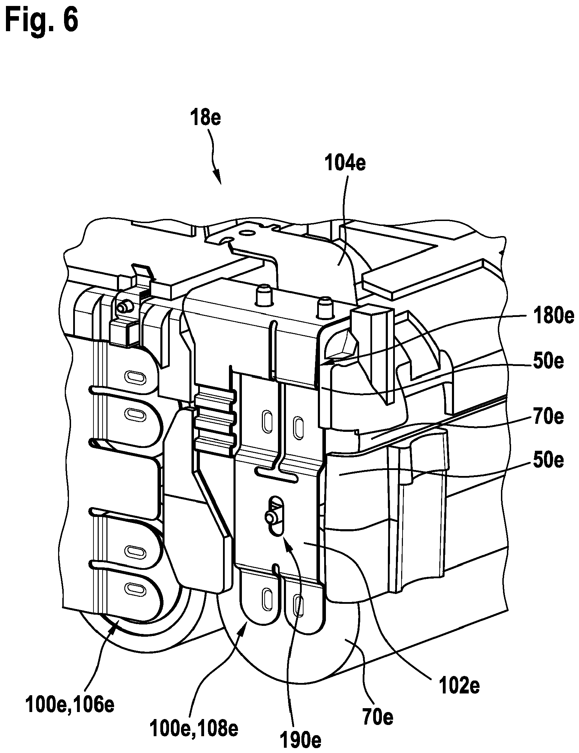

In Fig. 6 eine weitere Ausführungsform des zweiten Zellverbinders 108d gemäß Fig. 5a in einer perspektivischen Teilansicht gezeigt. Der Akkupack 18e ist als ein zweilagiger Akkupack 18e mit jeweils fünf Akkuzellen 70e in einer Lage ausgebildet, wobei die Akkuzellen 70e in einem mehrteiligen Zellenhalter angeordnet sind.

Der Akkupack 18e weist erste Zellverbinder 106e und zweite Zellverbinder 108e auf. Die zweiten Zellverbinder 108e weisen analog zu dem vorherigen Ausführungsbeispiel ein Leiterplattenverbindungselement 104e und ein Zellverbindungselement 102e auf, wobei das Zellverbindungselement 102e ein Verriegelungselement 180e aufweist. Zusätzlich weist das Zellverbindungselement 102e eine grö-βere Länge auf, da dieses zwei Akkuzellen 70e elektrisch miteinander verbindet. Aus diesem Grund weist der zweite Zellverbinder 108e eine zusätzliche Führung 190e auf.

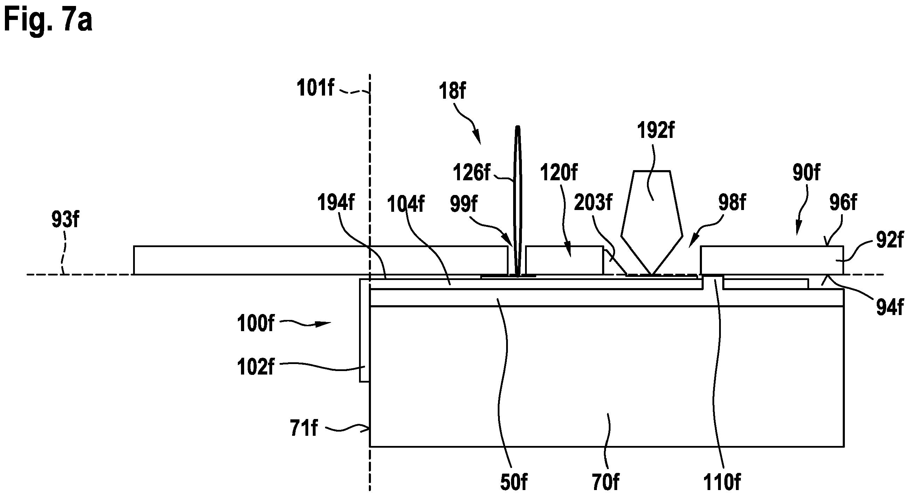

In Fig. 7a ist eine weitere alternative Ausführung eines Akkupacks 18f mit einem Zellverbinder 100f in einer schematischen Seitenansicht gezeigt.

Im Akkupack 18f sind die Akkuzellen 70f wie zuvor beschrieben in einem Zellenhalter 50f angeordnet und über Zellverbinder 100f mit einer Elektronik 90f, insbesondere einer Leiterplatte 92f, verbunden.

Der Zellverbinder 100f ist beispielhaft zur Überwachung von Einzelzellspannungen ausgebildet. Der Zellverbinder 100f ist beispielhaft einstückig ausgebildet. Das Zellverbindungselement 102f des Zellverbinders 100f ist stoffschlüssig, beispielhaft mittels eines Widerstandschweißverfahrens, mit einem Zellpol 71f der Akkuzelle 70f verbunden. Das Zellverbindungselement 102f spannt eine Zellverbinderebene 101f auf, die sich im Wesentlichen senkrecht zu einer Leiterplattenebene 93f erstreckt, die von der Leiterplatte 92f aufgespannt wird.

Das Leiterplattenverbindungselement 104f ist zur stoffschlüssigen Verbindung mit der Leiterplatte 92f vorgesehen. Das Leiterplattenverbindungselement 104f erstreckt sich entlang bzw. parallel zu der Leiterplattenebene 93f und wird mittels eines Positionierungselements 110f am Zellenhalter 50f gehalten. Das Leiterplattenverbindungselement 104f sitzt auf dem Zellenhalter 50f auf. Das Leiterplattenverbindungselement 104f ist vollständig zwischen dem Zellenhalter 50f und der Leiterplatte 92f angeordnet. Somit ist das Leiterplattenverbindungselement 104f auf einer Unterseite 94f der Leiterplatte 92f angeordnet.

Die Leiterplatte 92f weist auf seiner Unterseite 94f eine Verbindungsstelle 120f auf, die zur elektrischen Verbindung mit der Akkuzelle 70f, insbesondere dem Leiterplattenverbindungselement 104f des Zellverbinders 100f, ausgebildet ist. Die Verbindungsstelle 120f kann beispielsweise ein Lötpad in Form eines Kupferpads aufweisen.

Die Leiterplatte 92f umfasst ferner eine erste Aussparung 98f und eine zweite Aussparung 99f, die benachbart zu der Verbindungsstelle 120f angeordnet sind. Insbesondere ist die Verbindungsstelle 120f zwischen der ersten Aussparung 98f und der zweiten Aussparung 99f angeordnet. Die Aussparungen 98f, 99f sind zur Herstellung einer Stoffschlussverbindung, insbesondere einer Lötverbindung, zwischen dem Zellverbinder 100f und der Leiterplatte 92f vorgesehen. Die Aussparungen 98f, 99f sind beispielhaft getrennt voneinander ausgebildet, es ist allerdings ebenso denkbar, dass die erste Aussparung 98f und die zweite Aussparung 99f als eine große einzelne Aussparung ausgebildet sind.

Die erste Aussparung 98f ist zur Einbringung von thermischer Energie ausgebildet. Die Einbringung thermischer Energie erfolgt beispielhaft über einen Kontakt einer Verbindungsvorrichtung, insbesondere einer Lötvorrichtung 192f. Die Lötvorrichtung 192f kann beispielsweise wie zuvor beschrieben als ein Heizstempel oder ein Lötkolben ausgebildet sein. Das Leiterplattenverbindungselement 104f ist derart angeordnet, dass das Leiterplattenverbindungselement 104f im Bereich der ersten Aussparung 98f freiliegt, sodass die Lötvorrichtung 192f in die Aussparung 98f hineintauchen und das Leiterplattenverbindungselement 104f direkt beaufschlagen kann. Somit kann der Zellverbinder 100f mittels der Lötvorrichtung 192f direkt erhitzt werden.

Die zweite Aussparung 99f ist zur Einbringung eines Stoffschlussmittels 126f vorgesehen. Das Stoffschlussmittel 1216f kann beispielhaft als ein Draht aus Lötzinn oder als eine Lötpaste ausgebildet sein. Die zweite Aussparung 99f ist kleiner als die erste Aussparung 98f ausgebildet. Das Leiterplattenverbindungselement 104f ist derart angeordnet, dass das Leiterplattenverbindungselement 104f im Bereich der zweiten Aussparung 99f freiliegt, sodass das Stoffschlussmittel in die Aussparung 99f hineintauchen und das Leiterplattenverbindungselement 104f direkt beaufschlagen kann.

Während des Lötvorgangs wird der Zellverbinder 100f durch die Lötvorrichtung 192f erhitzt und die Wärme wird über den Zellverbinder 100f auf das Stoffschlussmittel 126f übertragen, sodass dieses schmilzt und sich zwischen dem Zellverbinder 100f, insbesondere dem Leiterplattenverbindungselement 104f, und der Leiterplatte 92f, insbesondere der Verbindungsstelle 120f, verteilt und diese elektrisch und fest miteinander verbindet. Ein Luftspalt **194**f zwischen der Leiterplatte 92f und dem Zellverbinder 100f ist derart ausgebildet, dass dieser Prozess durch Kapillarkräfte unterstützt wird. Alternativ oder zusätzlich ist ebenso denkbar, dass ein Flussmittel zugegeben wird, welches die Propagation des Lots weiter begünstigt.

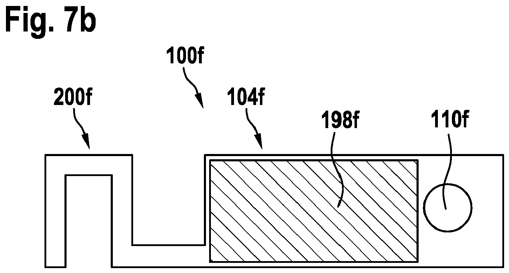

In Fig. 7b ist der Leiterplattenverbindungselement 104f in einer schematischen Seitenansicht in einer Blickrichtung senkrecht zu der Leiterplattenebene 93f gezeigt.

Das Leiterplattenverbindungselement 104f kann in dem zur Verbindung mit der Verbindungsstelle 120f vorgesehenen Verbindungsbereich 198f optional eine Beschichtung mit dem Stoffschlussmittel 126f aufweisen.

Der Zellverbinder 100f weist zudem eine Wärmeabflussbegrenzungselement 200f auf, welches außerhalb der Verbindungsstelle 120f bzw. außerhalb des Verbindungsbereichs 198f angeordnet ist. Das Wärmeabflussbegrenzungselement 200f ist dazu ausgebildet, den Abtransport von Wärme während des Lötvorgangs aus dem Verbindungsbereich 198f zu verringern. Das Wärmeabflussbegrenzungselement 200f ist zwischen dem Leiterplattenverbindungselement 104f und dem Zellverbindungselement 102f angeordnet. Das Wärmeabflussbegrenzungselement 200f ist beispielhaft einstückig mit dem Zellverbinder 100f ausgebildet. In einer alternativen einteiligen Ausbildung des Zellverbinders 100f, in der der Zellverbinder 100f aus mehreren stoffschlüssig miteinander verbundenen Teilen besteht, kann das Wärmeabflussbegrenzungselement 200f auch aus einem elektrisch leitfähigen aber thermisch schlechter als das Leiterplattenverbindungselement 104f bestehenden Werkstoff bestehen. Das Wärmeabflussbegrenzungselement 200f ist beispielhaft als eine Materialreduzierung in Form einer Meanderstruktur ausgebildet.

Zur Optimierung der Verbindung kann während des Lötvorgangs mittels einer geeigneten Vorrichtung ein Druck auf die Leiterplatte 92f im Bereich der Verbindungsstelle 120f in Richtung des Zellverbinders 100f aufgebracht werden, wodurch der Luftspalt 194f verringert wird.

Vorzugsweise liegt das Leiterplattenverbindungselement 104f im Bereich der Verbindungsstelle 120f auf einem thermisch stabilen Material auf, dass während des Lötvorgangs nicht schmilzt oder nur derart teilweise schmilzt, sodass die Funktion des Akkupacks 18f nicht beeinträchtigt wird. Beispielhaft kann der Zellenhalter 50f aus einem thermisch stabilen Material ausgebildet sein. Alternativ ist auch denkbar, dass zwischen dem Zellenhalter 50f und dem Zellverbinder 100f ein thermisch stabiles Zwischenelement, beispielsweise eine Kaptonfolie, angeordnet ist.

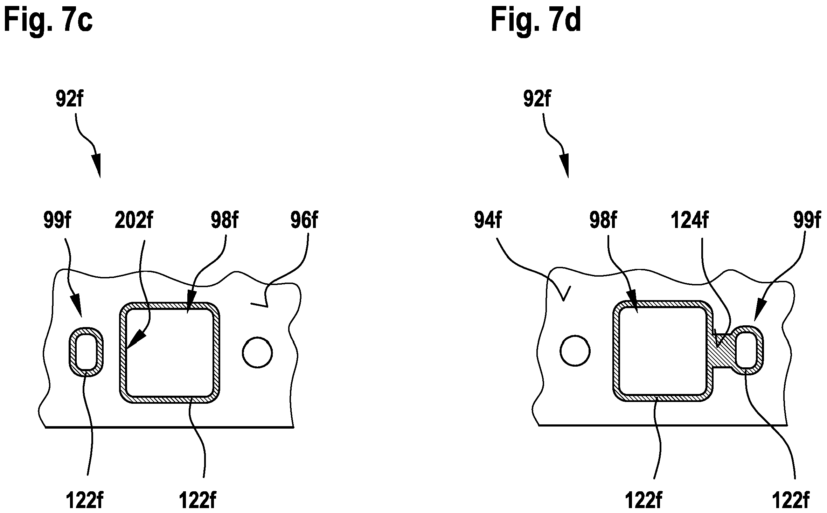

In Fig. 7c die Leiterplatte 92f im Bereich der Verbindungsstelle 120f in einer Draufsicht auf die Oberseite 96f, die dem Zellverbinder 100f abgewandt ausgebildet ist, und in Fig. 7d auf die Unterseite 94f, die dem Zellverbinder 100f zugewandt ist, gezeigt.

Die Aussparungen 98f, 99f weisen jeweils eine Kantenmetallisierung 122f auf, die über eine Kontaktfläche 124 aus Kupfer miteinander verbunden sind. Die Kontaktfläche 124f ist beispielhaft durchgehend zwischen den Aussparungen 98f, 99f ausgebildet. Die Kantenmetallisierungen 122f und die Kontaktfläche 124f sind der Verbindungsstelle 120f zugeordnet. Die Kontaktfläche 124f ist auf der Unterseite 94f der Leiterplatte 92f angeordnet und mit der Elektronik 90f des Akkupacks 18f elektrisch verbunden.

Das Stoffschlussmittel 126f propagiert während des Lötvorgangs von der zweiten Aussparungen 99f über die Kontaktfläche 124f zu der ersten Aussparung 98f, wobei an der Kantenmetallisierung 122f der ersten Aussparung 98f ein Meniskus 203f gebildet wird (siehe Fig. 7a).

Der gebildete Meniskus 203f und die Kantenmetallisierung 122f ist einer Prüfeinheit 202f, die zur optischen Prüfung des Stoffschlusses des Zellverbinders mit der Leiterplatte 92s ausgebildet ist, zugeordnet. Durch die Ausbildung des Meniskus 203f kann optisch geprüft werden, ob der Stoffschluss erfolgreich ist.

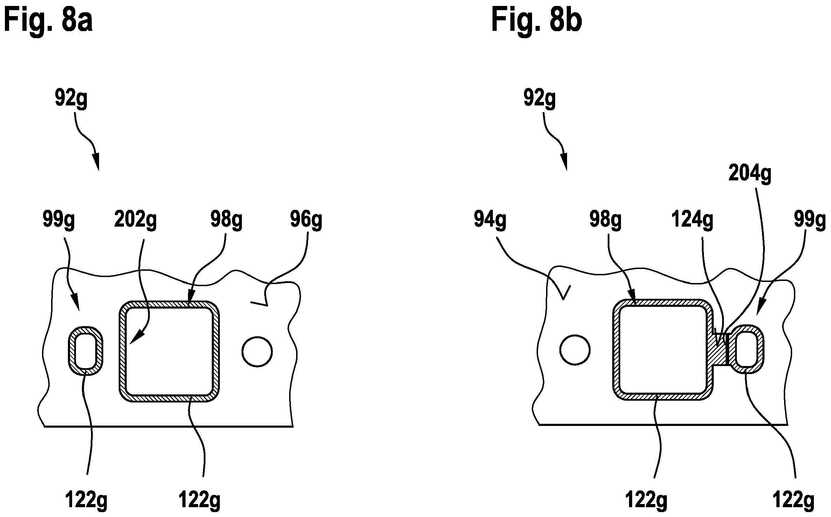

In Fig. 8a und Fig. 8b ist eine alternative Ausführungsform der zuvor beschriebenen Leiterplatte 92f in einer Draufsicht der Oberseite 96g und einer Unterseite 94g gezeigt.

Die Aussparungen 98g, 99g weisen jeweils eine Kantenmetallisierung 122g auf, die über eine Kontaktfläche 124g aus Kupfer miteinander verbunden beziehungsweise verbindbar sind. Die Kontaktfläche 124g ist beispielhaft unterbrochen zwischen den Aussparungen 98g, 99g ausgebildet. Die Unterbrechung 204g der Kontaktfläche 124g trennt diese in zwei vor dem Lötprozess nicht elektrisch miteinander verbundene Teilbereiche auf. Die Unterbrechung 204g ist beispielhaft als eine Materialaussparung ausgebildet. Durch den Lötprozess werden die beiden Teilbereiche elektrisch miteinander über das Stoffschlussmittel verbunden. Vor dem Lötvorgang sind somit die Kantenmetallisierungen 122g nicht elektrisch miteinander verbunden und nach einem erfolgreichen Lötvorgang sind die Kantenmetallisierungen 122g elektrisch miteinander verbunden.

Demnach weist die Leiterplatte 92g eine Prüfeinheit 202g auf, die zur optischen und elektrischen Prüfung der elektrischen Verbindung zwischen der Leiterplatte 92g und dem Zellverbinder 100g ausgebildet ist. Die optische Prüfung erfolgt wie zuvor über einen sich bildenden Meniskus an der Kantenmetallisierung 122g der ersten Aussparung 98f und die elektrische Prüfung erfolgt mittels eines elektrischen Messung zwischen den Kantenmetallisierungen 122g, die positiv bei einer Überbrückung der Unterbrechung 204g verläuft. Die Unterbrechung 204g und beide Kantenmetallisierungen 122g sind demnach in dieser Ausführungsform der Prüfeinheit 202g zugeordnet.

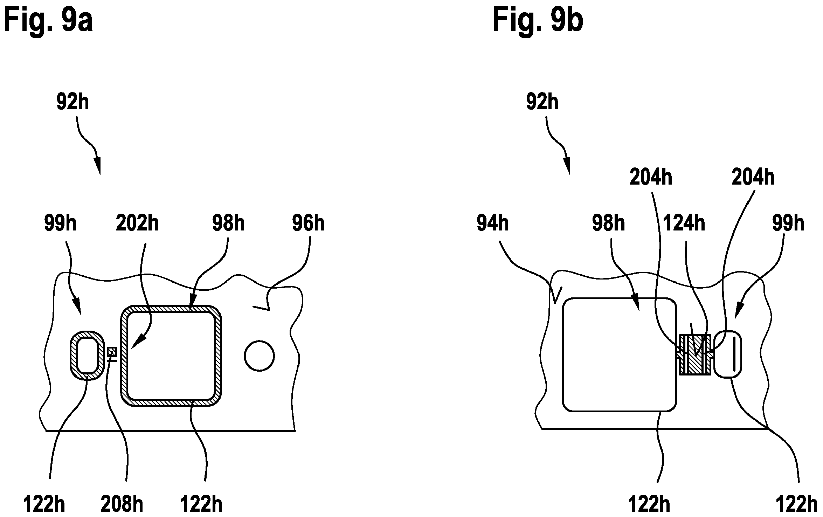

In Fig. 9a und Fig. 9b ist eine alternative Ausführungsform der zuvor beschriebenen Leiterplatte 92g in einer Draufsicht der Oberseite 96h und einer Unterseite 94h gezeigt.

Die Aussparungen 98h, 99h weisen jeweils eine Kantenmetallisierung 122h auf, die über eine Kontaktfläche 124h aus Kupfer miteinander verbunden bzw. verbindbar sind. Die Kontaktfläche 124h ist beispielhaft unterbrochen zwischen den Aussparungen 98h, 99h ausgebildet. Die Kontaktfläche 124h weist zwei Unterbrechungen 204h auf. Die Unterbrechungen 204h der Kontaktfläche 124h trennt diese in drei vor dem Lötprozess nicht elektrisch miteinander verbundene Teilbereiche auf. Die Unterbrechungen 204h sind beispielhaft als Materialaussparungen ausgebildet. Um eine elektrische Verbindung der Teilbereiche miteinander durch das Aufliegen auf der Leiterplatte 92h zu verhindern, sind auf den zwei au-βenliegenden Teilbereichen der Kontaktfläche 124h Lötpads angeordnet, die durch die Unterbrechungen 204h ebenfalls voneinander elektrisch isoliert werden. Auf den Lötpads ist Lot aufgebracht, wobei durch das Lot ein versehentlicher mechanischer Kontakt des mittleren Teilbereichs zu dem Zellverbinder verhindert wird. Die Lötpads wirken somit als Abstandshalter.

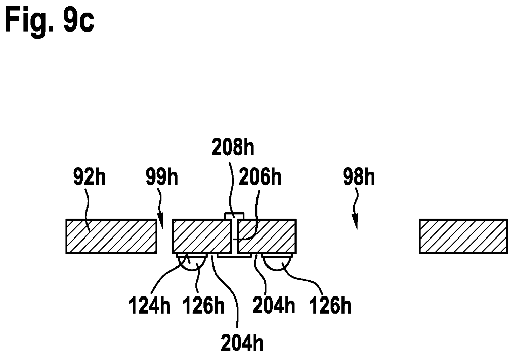

Zudem weist der mittlere Teilbereich auf der Unterseite 94h der Leiterplatte 92h eine Durchkontaktierung 206h auf, die mit einem Testpunkt 208h auf der Oberseite 96h der Leiterplatte 92h angeordnet ist, siehe die schematische Seitenansicht in Fig. 9c.

Durch den Lötprozess werden die Teilbereiche elektrisch miteinander über das Stoffschlussmittel verbunden. Nach dem Lötvorgang ist der Stoffschluss somit über eine optische Prüfung zusätzlich mittels einer elektrischen Prüfung überprüfbar. Die elektrische Prüfung erfolgt dabei über eine Signalmessung zwischen dem Testpunkt 208h auf der Leiterplatte 92h und dem Referenzpotential (GND).

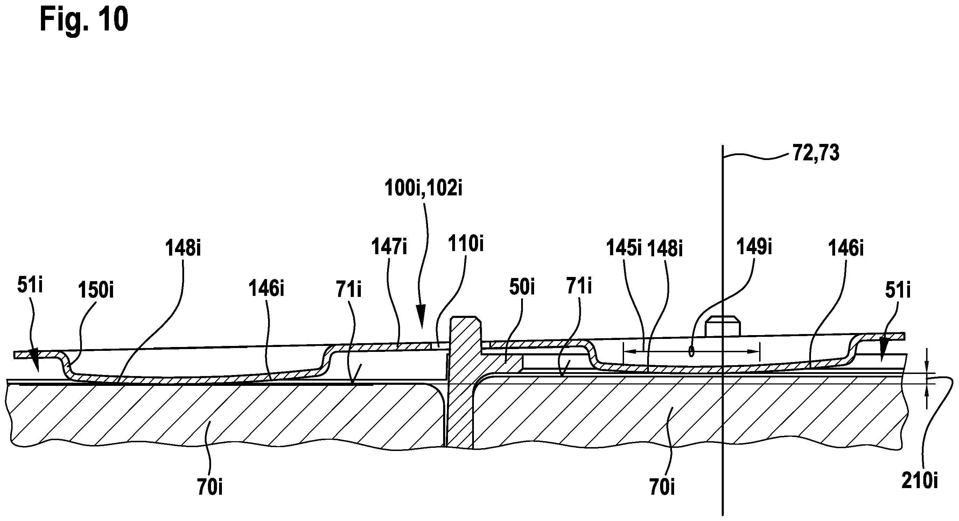

In Fig. 10 ist eine weitere alternative Ausführungsform eines Zellverbinders 100i in einem Querschnitt im mit zwei Akkuzellen 70i verbundenen Zustand gezeigt.

Der zugehörige Akkupack 18i weist einen Zellenhalter 50i auf. Der Zellenhalter 50i ist zur Aufnahme der Akkuzellen 70i ausgebildet. Insbesondere weist der Zellenhalter 50i Einzelzellenaufnahme 51i auf, in denen jeweils eine einzige Ackuzelle 70i aufgenommen ist.

Der Zellenhalter 50i ist derart ausgebildet, dass die Akkuzellen 70i, insbesondere die Zellpole 71i der Akkuzellen 70i, im montierten Zustand auf der gleichen Höhe liegen. Aufgrund von Fertigungstoleranzen bei der Herstellung der Akkuzellen 70i und des Zellenhalters 50i sowie der Montagetoleranz bei der Aufnahme der Ackuzellen 70i im Zellenhalter 50i kann ein axialer Versatz 210i der Akkuzellen 70i entlang der Längserstreckung 72i der Akkuzellen 70i entstehen, wie in Fig. 10 zu sehen ist.

Der Zellverbinder 100i weist ein Zellverbindungselement 102i auf, das zur elektrischen Verbindung der zwei Akkuzellen 70i vorgesehen ist. Der Zellverbinder 100i ist mit einem nicht dargestellten Leiterplattenverbindungselement mit einer nicht dargestellten Leiterplatte verbunden. Der Zellverbinder 100i ist zur Überwachung einer Einzelzellenspannung ausgebildet, es ist alternativ allerdings auch denkbar, dass der Zellverbinder zur Leistungsübertragung vorgesehen ist.

Das Zellverbindungselement 102i ist einstückig ausgebildet. Das Zellverbindungselement 102i ist für einen Stoffschluss mittels eines Laserschweißverfahrens vorgesehen.

Der Stoffschluss zwischen dem Zellverbinder 100i und den Akkuzellen 70i, insbesondere den Zellpolen 71i der Akkuzellen 70i, erfolgt dabei über jeweils über eine Verbindungsfläche 146i des Zellverbinders 100i, die teilweise an dem Zellpol 71i der Akkuzelle 70i anliegt. Die beiden Verbindungsflächen 146i sind dabei über eine Brücke 147i miteinander verbunden, wobei die Brücke 147i beispielhaft ein Positionierungselement 110i aufweist. Ein Berührungsbereich 148i des Zellverbinders 100i, in welchem der Zellverbinder an dem Zellpol 71i anliegt entspricht somit einer Teilfläche der Verbindungsfläche 146i.

Das Zellverbindungselement 102i ist im Bereich der Verbindungsflächen 146i beispielhaft topfförmig ausgebildet, wobei die Verbindungsfläche 146i einen Boden des Topfes bildet, der von einer zylindrischen Wandung 150i umschlossen wird.

Die Verbindungsflächen 146i sind konvex zum Ausgleich des axialen Versatzes 210i der Akkuzellen 70i ausgebildet. Insbesondere sind die Verbindungsflächen 146i derart konvex ausgebildet, dass eine Position des Berührungsbereichs 148i abhängig von dem axialen Versatz 210i der Akkuzellen 70i ist. Weisen die Ackuzellen 70i relativ zueinander keinen axialen Versatz 210i auf und liegen damit auf der gleichen Höhe, so liegt der Berührungsbereich 148i beispielhaft mittig auf den Zellenpolen 71i.

Je größer der axiale Versatz 210i ist, desto größer ist der Abstand einer Mitte 149i des Berührungsbereichs 148i von einer Mittelachse 73i ist. Durch die konvexe Ausgestaltung der Verbindungsfläche 146i ist eine Größe des Berührungsbereichs 148i in einem gewissen Bereich, beispielhaft bei einem axialen Versatz 210i von bis zu 0,5 mm, im Wesentlichen konstant.

Beispielhaft beträgt ein Durchmesser der Verbindungsfläche 146i ca. 50% eines Durchmessers der Akkuzelle 70i und ein Durchmesser 145i des Berührungsbereich 148i entspricht ca. 30% des Durchmessers der Akkuzelle 70i.

Durch die konvexe Form der Verbindungsfläche 146i kann im Gegensatz zu den üblichen für das Laserschweißen verwendeten ebenen Verbindungsflächen sichergestellt werden, dass auch bei einem großen axialen Versatz stets eine ausrechend großer Berührungsbereich 148i zur Herstellung der Schweißverbindung vorhanden ist.

Der Verbindungsprozess kann weiter verbessert werden, indem während des Laserschweißens ein Druck auf den Zellverbinder 100i in Richtung der Zellpole 71i ausgeübt wird.

Zudem ist denkbar, dass mittels eine optischen Systems die Position des Berührungsbereichs 148i, beispielhaft anhand der Verformung, ermittelt wird und die Position der Laserbestrahlung abhängig von der Position des Berührungsbereichs 148i angepasst wird.

## Patentansprüche

1. Akkupack mit einem Gehäuse (48), mit einem Zellenhalter (50), mit zumindest einer Akkuzelle (70), wobei die Akkuzelle (70) zumindest teilweise in dem Zellenhalter (50) aufgenommen ist, mit einem Zellverbinder (100), wobei der Zellverbinder (100) zur elektrischen Verbindung der Akkuzelle (70) ausgebildet ist, und mit einer Leiterplatte (92), wobei der Zellverbinder (100) mit der Leiterplatte (92) elektrisch verbunden ist,
**dadurch gekennzeichnet, dass**
der Akkupack (18) ein Montageelement (116) zur Unterstützung der Verbindung des Zellverbinders (100) mit der Leiterplatte (92) aufweist, wobei das Montageelement (116) in einer Aussparung (118) der Leiterplatte (92) angeordnet ist.

2. Akkupack nach Anspruch 1, **dadurch gekennzeichnet, dass** der Akkupack (18) zumindest zwei Akkuzellen (70) aufweist, wobei der Zellverbinder (100) zur elektrischen Verbindung der zumindest zwei Akkuzellen (70) ausgebildet ist.

3. Akkupack nach Anspruch 2, **dadurch gekennzeichnet, dass** der Zellverbinder (100) ein Zellverbindungselement (102) zur elektrischen Verbindung der Akkuzellen (92) und ein Leiterplattenverbindungselement (104) zur elektrischen Verbindung mit der Leiterplatte (92) aufweist.

4. Akkupack nach Anspruch 3, **dadurch gekennzeichnet, dass** das Leiterplattenverbindungselement (102) zur Überwachung einer Einzelzellspannung ausgebildet ist.

5. Akkupack nach einem der vorhergehenden Ansprüche, **dadurch gekennzeichnet, dass** der Zellverbinder (100) einstückig ausgebildet ist, wobei der Zellverbinder (100) insbesondere aus Reinkupfer, einer Kupferlegierung oder Nickel besteht.

6. Akkupack nach einem der Ansprüche 3 bis 5, **dadurch gekennzeichnet, dass** das Leiterplattenverbindungselement (104) in der Aussparung (118) der Leiterplatte (92) zwischen der Leiterplatte (92) und dem Montageelement (116) angeordnet ist.

7. Akkupack nach einem der vorhergehenden Ansprüche, **dadurch gekennzeichnet, dass** die Leiterplatte (92) eine Leiterplattenebene (93) aufspannt, die sich im Wesentlichen senkrecht zu einer Zellverbinderebene (101) erstreckt, die durch das Zellverbindungselement (100) aufgespannt ist.

8. Akkupack nach einem der vorhergehenden Ansprüche, **dadurch gekennzeichnet, dass** die Aussparung (118) der Leiterplatte (92) eine Kantenmetallisierung (122) aufweist, wobei das Leiterplattenverbindungselement (104) an der Kantenmetallisierung (122) anliegt.

9. Akkupack nach einem der vorhergehenden Ansprüche, **dadurch gekennzeichnet, dass** das Montageelement (100) starr ausgebildet ist.

10. Akkupack nach einem der Ansprüche 3 bis 9, **dadurch gekennzeichnet, dass** der Zellverbinder (100), insbesondere das Leiterplattenverbindungselement (104) des Zellverbinders (100), stoffschlüssig, vorzugsweise über eine Lötverbindung, mit der Leiterplatte (92) verbunden ist.

11. Akkupack nach einem der vorhergehenden Ansprüche, **dadurch gekennzeichnet, dass** das Montageelement (116a) als ein Federelement (128a) ausgebildet ist, das den Zellverbinder (100a) mit einer Kraft in Richtung der Leiterplatte (92a) beaufschlagt.

12. Akkupack nach einem der vorhergehenden Ansprüche, **dadurch gekennzeichnet, dass** das Montageelement (116) einstückig mit dem Zellenhalter (50) ausgebildet ist.

13. Herstellungsverfahren für einen Akkupack, mit einem Gehäuse (48), mit einem Zellenhalter (50), mit zumindest einer Akkuzellen (70), wobei die die Akkuzelle (70) zumindest teilweise in dem Zellenhalter (50) aufgenommen ist, mit einem Zellverbinder (100), wobei der Zellverbinder (100) zur elektrischen Verbindung der Akkuzelle (70) ausgebildet ist, und mit einer Leiterplatte (92), wobei die Leiterplatte (92) eine Aussparung (118) aufweist, und mit einem Montageelement (116) zur Unterstützung der Verbindung des Zellverbinders (100) mit der Leiterplatte (92),
**dadurch gekennzeichnet, dass**
die Verbindung zwischen dem Zellverbinder (100) und der Leiterplatte (92) über ein Aufpressen der Leiterplatte (92) erfolgt, bei der der Zellverbinder (92) mit dem Montageelement (116) in der Aussparung (118) aufgenommen und verformt wird.

14. Herstellungsverfahren für einen Akkupack (18) nach Anspruch 13, **dadurch gekennzeichnet, dass** die Aussparung (118) der Leiterplatte (92) eine Kantenmetallisierung (122) aufweist, wobei der Zellverbinder (100) durch das Montageelement (116) mit einer Kraft in Richtung der metallisierten Wand beaufschlagt wird.
